# EUROPÄISCHE PATENTSCHRIFT

(11) **EP 4 614 257 B1**
(45) Veröffentlichungstag und Bekanntmachung des Hinweises auf die Patenterteilung: **25.03.2026**
(21) Anmeldenummer: 24161367.8
(22) Anmeldetag: 05.03.2024
(51) Int. Cl.: G05B 19/418

(54) **VERFAHREN ZUR COMPUTER-GESTÜTZTEN INSTALLATION UND/ODER INBETRIEBNAHME UND/ODER WARTUNG UND/ODER MODERNISIERUNG EINER INDUSTRIELLEN ANLAGE**
METHOD FOR COMPUTER-ASSISTED INSTALLATION AND/OR COMMISSIONING AND/OR MAINTENANCE AND/OR MODERNIZATION OF AN INDUSTRIAL INSTALLATION
PROCÉDÉ D'INSTALLATION ET/OU DE MISE EN SERVICE ET/OU DE MAINTENANCE ASSISTÉ PAR ORDINATEUR ET/OU DE MODERNISATION D'UNE INSTALLATION INDUSTRIELLE

(43) Veröffentlichungstag der Anmeldung: 10.09.2025
(73) Patentinhaber: Murrelektronik GmbH, 71570 Oppenweiler (DE)
(72) Erfinder: Pfestorf, Sebastian, 71522 Backnang (DE); Zeller, Paul, 74223 Flein (DE)
(74) Vertreter: Bösherz Goebel Patentanwälte

(56) Entgegenhaltungen:
- EP-A2- 1 383 061
- DE-A1- 102017 219 002
- US-A1- 2002 049 775
- US-A1- 2022 075 351

## Beschreibung

Die vorliegende Erfindung betrifft ein Verfahren zur computer-gestützten Installation und/oder Inbetriebnahme und/oder Wartung und/oder Modernisierung einer industriellen Anlage.

### Stand der Technik

Es ist bekannt, dass die Komponenten einer industriellen Anlage in einer zentralen Topologie verschaltet sein können, bei welcher ein zentraler Schaltschrank direkt mit Geräten, wie beispielsweise Sensoren und Aktoren, verbunden ist. Alternativ kann die Anlage auch in einer dezentralen Topologie geplant werden. Dies bedeutet, dass dezentral angeordnete Anschlusselemente vorgesehen sind, an denen jeweils ein oder mehrere Geräte zur Bereitstellung von Automatisierungsfunktionen angeschlossen werden. Die dezentrale Topologie bietet den Vorteil, dass die Anlage einen flexibleren Aufbau hat, einfacherer zu installieren ist und eine höhere Effizienz und Wirtschaftlichkeit aufweisen kann.

Die Installation der Anlage kann im Einzelfall dennoch aufwendig sein, insbesondere, wenn eine Vielzahl verschiedener Geräte zum Einsatz kommt.

Eine herkömmliche Lösung ist aus der Offenlegungsschrift DE 10 2017 219 002 A1 bekannt. Diese Druckschrift offenbart eine Installationsunterstützungsvorrichtung zur Unterstützung eines Installationsvorgangs für ein Automatisierungssystem.

### Offenbarung der Erfindung

Gegenstand der Erfindung ist ein Verfahren mit den Merkmalen des Anspruchs 1, ein Computerprogramm mit den Merkmalen des Anspruchs 14 sowie eine Vorrichtung mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm sowie der erfindungsgemäßen Vorrichtung, und jeweils umgekehrt, so dass bezüglich der Offenbarung der Erfindung stets auch eine wechselseitige Bezugnahme möglich ist.

Gegenstand der Erfindung ist ein Verfahren, vorzugsweise ein computer-implementiertes Verfahren, zur computer-gestützten Installation und/oder Inbetriebnahme und/oder Wartung und/oder Modernisierung einer industriellen Anlage.

Das erfindungsgemäße Verfahren umfasst ein Bereitstellen einer Installationsvorgabe, insbesondere mit einem digitalen Schaltplan und/oder mechanischen Plan. Die Bereitstellung und/oder die bereitgestellte Installationsvorgabe kann dazu dienen, um einen zumindest teilweisen Aufbau zumindest eines Teils der Anlage vorzugeben. Der zumindest teilweise Aufbau kann einen mechanischen und/oder einen hydraulischen und/oder einen fluiden und/oder einen pneumatischen und/oder einen elektrischen Aufbau umfassen. Dies bedeutet insbesondere, dass der Aufbau der Anlage durch unterschiedliche Darstellungen vorgegeben wird, wie bspw. eine mechanische (MCAD) oder elektrische (ECAD) Darstellung.

Bei dem zumindest teilweisen Aufbau können zudem Geräte und Anschlusselemente, letztere insbesondere in der Form von Modulen, zur Bereitstellung von Automatisierungsfunktionen elektrisch und/oder für einen Signal- und/oder Datenaustausch, insbesondere dezentral und/oder im Feld, miteinander verbunden sein. Die Verbindung kann z. B. kabelgebunden und/oder via Funk erfolgen. Dabei kann die Installationsvorgabe die Verbindungen zwischen den Geräten und den Anschlusselementen spezifizieren. Die Installationsvorgabe kann somit auch als ein digitaler Schaltplan oder ein Soll-Plan verstanden werden.

Das erfindungsgemäße Verfahren umfasst weiter ein Bereitstellen einer Montage- und/oder Anschlussdokumentation. In der Montage- und/oder Anschlussdokumentation kann auf Basis der bereitgestellten Installationsvorgabe der zumindest teilweise Aufbau, vorzugsweise umfassend einen mechanischen und/oder einen hydraulischen und/oder einen fluiden und/oder einen pneumatischen und/oder einen elektrischen Aufbau und/oder die Verbindung der Geräte mit den Anschlusselementen, dokumentiert sein. Die Montage- und/oder Anschlussdokumentation kann hierzu z. B. aus einer computer-geführten Installation und/oder Dokumentation resultieren, bei welcher ein Benutzer bspw. mehrere Installationsschritte bestätigt. Dies kann z. B. die Bestätigung sein, dass ein Gerät mit einem Anschluss eines Anschlusselementes verbunden wurde. Auch kann die Bestätigung die genaue Angabe des Anschlusses umfassen, da die Anschlusselemente mehrere Anschlüsse zur Verbindung mit den Geräten aufweisen können.

Das erfindungsgemäße Verfahren umfasst weiter ein Bereitstellen einer Ist-Spezifikation, welche einen tatsächlichen zumindest teilweisen Aufbau zumindest eines Teils der Anlage und/oder eine tatsächliche Verbindung der Geräte mit den Anschlusselementen bei der Anlage spezifiziert. Unter dem tatsächlichen Aufbau wird mit anderen Worten der reale Aufbau bezeichnet, wie er tatsächlich an der Maschine vorliegt. Dieser kann bspw. durch eine manuelle Erfassung und/oder eine automatisierte Erfassung bei der Anlage ermittelt werden. Auch die Ist-Spezifikation kann dabei im Rahmen der computer-geführten Installation und/oder Dokumentation ermittelt worden sein, z. B. durch die Erfassung von wenigstens einer Benutzereingabe und/oder -korrektur hinsichtlich einer tatsächlichen Ausführung eines Installationsschrittes. Darüber hinaus kann ggf. eine elektrische und/oder digitale Auswertung der Anschlusselemente vorgesehen sein, um die tatsächliche Verbindung mit den Geräten zu prüfen.

Das erfindungsgemäße Verfahren umfasst weiter ein Ermitteln eines Abgleichergebnisses auf Basis einer automatisierten Auswertung der bereitgestellten Montage- und/oder Anschlussdokumentation und der Ist-Spezifikation. Hierbei wird eine Differenz zwischen der Ist-Spezifikation und der Montage- und/oder Anschlussdokumentation ermittelt, als eine Differenz zwischen dem tatsächlichen zumindest teilweisen Aufbau und dem dokumentierten zumindest teilweisen Aufbau, jeweils zumindest hinsichtlich des Teils der Anlage, und/oder zwischen der tatsächlichen Verbindung und der dokumentierten Verbindung. Auf dieser Basis kann die ermittelte Differenz im Abgleichergebnis bereitgestellt werden. Mit anderen Wort kann durch das Ermitteln des Abgleichergebnisses ein Soll/Ist-Abgleich vorgenommen werden, vorzugsweise bis zur E/A Ebene der Anschlusselemente und/oder bis zur Geräteebene, insbesondere Sensor-Aktor Ebene, der Anschlusselemente. Unter E/A-Ebene wird insbesondere verstanden, dass die konkreten Anschlüsse, insbesondere Ports, bekannt sind, an denen die Geräte am Anschlusselement angeschlossen werden. Dies kann über die Angabe von E/A-Adresse möglich sein, wobei hierzu ein E-A-Adressbereich im Rahmen der Parametrisierung der Anlage festgelegt sein kann.

Das Ermitteln des Abgleichergebnisses kann ferner als eine automatisierte Prüfung ausgeführt sein, bei der geprüft wird, ob ein Gerät tatsächlich entsprechend dem dokumentierten Aufbau bzw. der dokumentierten Verbindung, d. h. bspw. am dokumentierten Anschluss eines Anschlusselements, angeschlossen worden ist. Die Prüfung kann entsprechend einen elektrischen Soll/Ist-Abgleich umfassen, bei welchem elektrisch überprüft wird, an welchen Anschlüssen eines Anschlusselements ein Gerät verbunden wurde und/oder welches Gerät verbunden worden ist. Dabei können ggf. auch die elektrischen Eigenschaften des verbundenen Geräts mit den erwarteten Eigenschaften verglichen werden. Das Abgleichergebnis, insbesondere der Soll/Ist-Abgleich, kann dann genutzt werden, um festzustellen, ob das Gerät korrekt angeschlossen wurde und ob es ordnungsgemäß funktioniert.

Das erfindungsgemäße Verfahren umfasst weiter ein Bereitstellen des Abgleichergebnisses für die Anlage und/oder für eine weitere Anlage, insbesondere für eine Installation und/oder Inbetriebnahme und/oder einen Betrieb und/oder eine Wartung und/oder eine Modernisierung der jeweiligen Anlage. Hierzu wird das Abgleichergebnis genutzt, um eine neue Installationsvorgabe bereitzustellen und um ggf. die Installation und/oder Inbetriebnahme und/oder den Betrieb und/oder die Wartung und/oder die Modernisierung automatisiert und/oder computer-gestützt anzuleiten. Die Anleitung kann dabei vorzugsweise eine visuelle Ausgabe, bevorzugt über Augmented Reality, umfassen. Dies kann den Vorteil haben, dass Änderungen und Verbesserungen bei der Installation und/oder Inbetriebnahme und/oder dem Betrieb und/oder der Wartung und/oder der Modernisierung der jeweiligen Anlage berücksichtigt werden können. Die neue Installationsvorgabe und ggf. die Anleitung enthält dabei eine detaillierte Beschreibung des Aufbaus der jeweiligen Anlage und/oder von Installationsschritten, vorzugsweise einschließlich der Abmessungen und/oder Materialien und/oder Komponenten für die Anlage und ihrer Funktionsweise, und/oder Anweisungen für den Betrieb und die Wartung der Anlage, einschließlich der erforderlichen Wartungsarbeiten, der empfohlenen Wartungsintervalle und der erforderlichen Ersatzteile. Schließlich kann die Anleitung auch Informationen über die Modernisierung der Anlage enthalten, einschließlich der empfohlenen Umbau- und/oder Verbesserungsmaßnahmen und der erforderlichen Schritte zur Durchführung der Umbau- und/oder Verbesserungsmaßnahmen. Durch die Bereitstellung detaillierter Informationen und Anweisungen kann die neue Installationsvorgabe bzw. Anleitung dazu beitragen, die Effizienz und Zuverlässigkeit der Anlage zu verbessern und die Betriebskosten zu senken.

Als eine weitere Möglichkeit aus der Bereitstellung des Abgleichergebnisses ergibt sich die Ausgabe eines Ergebnisses der Prüfung und/oder einer Warnung an einen Benutzer. Alternativ oder zusätzlich kann das Abgleichergebnis dazu genutzt werden, um zumindest einen Teil der Installation und/oder Wartung, insbesondere mehrere Installationsschritte, zu bewerten. Diese Bewertung kann z. B. während oder nach der computer-geführten Installation und/oder Dokumentation durchgeführt werden, um zu ermitteln, wie vorgabengetreu die Installation/Wartung vorgenommen wurde. Diese Bewertung kann dann z. B. einem Benutzer zugeordnet werden, welcher die Installation/Wartung vorgenommen hat. Hierzu kann es möglich sein, dass eine Benutzerkennung bei der computer-geführten Installation und/oder Dokumentation erfasst wird.

Eine Anwendung des Abgleichergebnisses kann es sein, einen Soll/Ist-Abgleich bis zur E/A - Ebene der Anschlusselemente zu ermöglichen. Hierzu kann eine Sensorik bei der Anlage vorgesehen sein, die eine präzise Erfassung von elektrischen Signalen und/oder Daten und/oder elektrischen Strömen an den Anschlüssen der Anschlusselemente ermöglicht. Durch den Einsatz von digitalen Steuerungselementen kann es weiter möglich sein, dass eine Ansteuerung der E/A-Ebene erfolgt, um Soll- mit den Ist-Werten abzugleichen. Die Anlage kann ferner mit wenigstens einer Überwachungskamera ausgestattet sein, die eine visuelle Kontrolle der Anschlusselemente und/oder Geräte, insbesondere auf E/A-Ebene, ermöglicht und somit den Soll/Ist-Abgleich erleichtert.

Die Anlage, insbesondere industrielle Anlage, kann eine elektrische Maschine und/oder eine industrielle Automatisierungsanlage umfassen. Des Weiteren kann die Anlage, insbesondere industrielle Anlage, zumindest teilweise als eine mechanische und/oder eine hydraulische und/oder eine fluide und/oder eine pneumatische und/oder eine elektrische Anlage ausgebildet sein.

Das erfindungsgemäße Verfahren kann eine computer-gestützte Installation und/oder Inbetriebnahme und/oder Wartung und/oder Modernisierung und/oder eine Prüfung und/oder einen Betrieb der Anlage oder einer weiteren Anlage zumindest teilweise bereitstellen. Das Verfahren kann hierzu zumindest teilweise oder vollständig durch eine Vorrichtung zur Datenverarbeitung, insbesondere umfassend einen oder mehrere Computer, ausgeführt werden. Als computer-gestützt wird insbesondere verstanden, dass automatisierte Funktionen durch die Vorrichtung bereitgestellt werden. Dies kann dazu dienen, um einen Benutzer wie einen Installateur bei der Arbeit an der Anlage zu unterstützen. Dabei kann die Installation z. B. eine Erstinstallation oder eine erneute Installation der Anlage oder einer weiteren Anlage betreffen, bei welcher die Anlage gemäß ihrer vorgegebenen Topologie aufgebaut wird. Der Aufbau kann konkret einen Einbau und Anschluss von mehreren Komponente der Anlage umfassen. Dies geschieht vorzugsweise anhand einer vorgegebenen Installationsvorgabe. Darüber hinaus kann die Inbetriebnahme ein Einrichten und/oder Prüfen der Anlage umfassen, und die Wartung eine Überprüfung und/oder Reparatur und/oder einen Austausch einzelner oder mehrerer der Komponenten der Anlage betreffen. Die Modernisierung der Anlage kann ferner einen Austausch von Komponenten betreffen, um die Anlage mit einer neuen/angepassten oder verbesserten Funktionalität zu erweitern und/oder die Effizienz und Leistung der Anlage zu verbessern.

Es ist möglich, dass das erfindungsgemäße Verfahren ein Bereitstellen einer Installationsvorgabe, insbesondere mit einem digitalen Schaltplan und/oder einem mechanischen Plan, umfasst. Hierzu kann die Installationsvorgabe z. B. in der Form von digitalen Daten abgerufen werden, bspw. aus einem Datenspeicher oder einer Datenbank, und/oder nicht-flüchtig in einer Vorrichtung zur Datenverarbeitung hinterlegt sein. Die Installationsvorgabe kann einen Soll-Plan umfassen, welcher den gewünschten Aufbau der Anlage zumindest teilweise angibt.

Die bereitgestellte Installationsvorgabe kann dazu dienen, einen zumindest teilweisen Aufbau, insbesondere einen mechanischen und/oder einen fluiden und/oder einen pneumatischen und/oder hydraulischen und/oder einen elektrischen Aufbau, zumindest eines Teils der Anlage vorzugeben. Bei dem vorgegebenen zumindest teilweisen Aufbau können Geräte, insbesondere Sensoren und/oder Aktoren, und wenigstens ein oder mehrere Anschlusselemente, insbesondere ein oder mehrere Module, zur Bereitstellung von Automatisierungsfunktionen verbunden werden. Die Verbindung kann elektrisch und/oder für einen Signal- und/oder Datenaustausch und/oder kabelgebunden und/oder via Funk erfolgen. Weiter kann die Verbindung im Feld und/oder dezentral vorgesehen sein. Für die Verbindung können z. B. jeweils ein oder mehrere der Geräte mit Anschlüssen eines jeweiligen Anschlusselements verbunden werden.

Die Verbindung der Geräte der Anlage mit den Anschlusselementen kann bevorzugt im Feld erfolgen. "Im Feld" bedeutet insbesondere in diesem Zusammenhang, dass die Geräte und/oder Anschlusselemente nicht zentral im Schaltschrank verbunden sind, sondern dezentral an verschiedenen Orten innerhalb der Anlage verteilt sind und dort miteinander verbunden werden können. Dies ermöglicht eine flexible und platzsparende Installation der Anlage und erleichtert auch Wartungs- und Reparaturarbeiten vor Ort.

Das eine oder die mehreren Anschlusselemente können als zumindest eines der folgenden ausgebildet sein und/oder zumindest eines der folgenden umfassen:
- ein Modul,
- ein Feldbusmodul,
- ein Masterelement, vorzugsweise ein IO-Link-Master und/oder ein Feldbusmaster,
- ein Verteiler,
- ein Klemmkasten,
- ein Netzgerät,
- eine Sicherung,
- eine Anschlusskarte,
- einen Signalwandler,
- ein Steuergerät, vorzugsweise Motorsteuergerät,
- ein Teil einer Steuerungseinrichtung,

Die Verbindungen zwischen den Komponenten, d. h. dem zumindest einen Anschlusselement und den Geräten, kann so vorgesehen sein, dass jedes der Anschlusselemente zur Verbindung mit einem oder mehreren der Geräte dient. Hierzu kann das jeweilige Anschlusselement mehrere Anschlüsse für die Geräte aufweisen. Konkret kann es vorgesehen sein, dass das jeweilige Anschlusselement mindestens 2 oder mindestens vier oder mindestens sechs Anschlüsse aufweist, um an jedem der Anschlüsse mindestens eines der Geräte zu verbinden. Die Verbindungen können elektrische Verbindungen und/oder Daten- und/oder Signal-Verbindungen umfassen. Unter einer elektrischen Verbindung kann dabei auch eine Verbindung zur elektrischen Energieversorgung verstanden werden. Ein Signalaustausch kann auch einen analogen Signalaustausch umfassen, der Datenaustausch vorzugsweise einen digitalen Signalaustausch. Darüber hinaus kann die Verbindung im Feld und/oder dezentral vorgesehen sein. Im dezentralen Fall erfolgt die Verbindung insbesondere außerhalb einer zentralen Steuerungseinrichtung und/oder außerhalb eines Schaltschrankes direkt im Feld. Ferner kann die Verbindung kabelgebunden und/oder via Funk erfolgen, d. h., dass die Anschlusselemente und/oder Geräte zumindest teilweise einen Kabel-Anschluss und/oder eine Funkschnittstelle aufweisen können. Die Anschlüsse können ferner zur Verbindung mit einem Steckverbinder ausgestaltet sein. Darüber hinaus können die Anschlüsse eines jeweiligen Anschlusselements auch an einem Gehäuse des Anschlusselements vorgesehen sein, und bevorzugt jeweils mit einer Leiterplatte und/oder Elektronik innerhalb des Gehäuses elektrisch verbunden sein. Das Gehäuse kann eine Abdichtung aufweisen und/oder eine Vergussmasse für die Elektronik zumindest teilweise umgeben, um eine wasser-, staubund/oder feuchtigkeitsgeschützte, d. h. insbesondere IP67 -fähig, Ausbildung des Anschlusselements zu ermöglichen.

Die Verbindung eines oder mehrerer der Geräte mit dem oder einem der Anschlusselemente kann vorzugsweise durch einen Anschluss des einen Geräts oder der mehreren Geräte an einen Anschluss oder mehreren Anschlüssen des Anschlusselements erfolgen. Hierzu kann der jeweilige Anschluss bspw. als ein Port oder eine Klemme ausgebildet sein. Dabei muss die Verbindung nicht zwangsläufig eine Verbindung nur zwischen zwei Komponenten sein. Durch ein T-Stück ist es bspw. möglich, dass nicht nur ein, sondern zwei Geräte an einem Anschluss wird, oder auch, dass ein Gerät an zwei Anschlüsse angeschlossen wird.

Es kann ferner bei dem erfindungsgemäßen Verfahren ein Bereitstellen einer Montage- und/oder Anschlussdokumentation vorgesehen sein, bei welcher auf Basis der bereitgestellten Installationsvorgabe der zumindest teilweise Aufbau dokumentiert ist. Der zumindest teilweise Aufbau kann dabei einen mechanischen und/oder einen hydraulischen und/oder einen fluiden und/oder einen pneumatischen und/oder einen elektrischen Aufbau umfassen. Ebenfalls ist es denkbar, dass bei der Montage- und/oder Anschlussdokumentation auf Basis der bereitgestellten Installationsvorgabe die Verbindung der Geräte mit dem Anschlusselement bzw. mit den Anschlusselementen dokumentiert ist. Die Montage- und/oder Anschlussdokumentation kann somit dazu dienen, die von einem Benutzer auf Basis der Installationsvorgabe durchgeführte Montage und durchgeführten Verbindungen zu dokumentieren. Hierzu kann bspw. eine Bestätigung einzelner Installationshandlungen, insbesondere Installationsschritte, durch den Benutzer vorgesehen sein. Auch kann es möglich sein, dass die Installationshandlungen zumindest teilweise automatisch bestätigt werden.

Es ist möglich, dass bei dem erfindungsgemäßen Verfahren und insbesondere bei der Montage- und/oder Anschlussdokumentation Abweichungen zwischen dem dokumentierten zumindest teilweisen Aufbau, insbesondere der/den dokumentierten Verbindung(en), d. h. der Dokumentation, und dem vorgegebenen zumindest teilweisen Aufbau bzw. der vorgegebenen Verbindung(en) gemäß der Installationsvorgabe ermittelt und/oder erkannt werden. Die Abweichungen können dem Benutzer ausgegeben werden und/oder der Benutzer kann die Abweichungen korrigieren und/oder bestätigen.

Es ist weiter es denkbar, dass auch die Dokumentation nicht dem tatsächlichen, also realen, zumindest teilweisen Aufbau zumindest eines Teils der Anlage, insbesondere nicht der/den tatsächlichen Verbindungen(en) bei der Anlage, entspricht. Dies kann bspw. durch eine fehlerhafte Bestätigung möglich sein. Daher ist es möglich, dass eine Ist-Spezifikation bereitgestellt wird, welche einen tatsächlichen zumindest teilweisen Aufbau zumindest eines Teils der Anlage und/oder eine tatsächliche Verbindung der Geräte mit dem Anschlusselement bzw. den Anschlusselementen bei der Anlage spezifiziert. Die Ist-Spezifikation kann z. B. durch eine elektronische Auswertung des oder der Anschlusselemente, z. B. durch eine Kommunikation mit dem jeweiligen Anschlusselement, ermittelt werden. Hierzu kann das jeweilige Anschlusselement bspw. zurückmelden, welche Geräte dort angeschlossen und/oder welche Anschlüsse belegt sind. Ebenfalls kann die Ist-Spezifikation z. B. dadurch ermittelt werden, dass eine Ausgabe der Geräte und/oder eine Benutzereingabe ausgewertet wird.

Es ist ferner möglich, dass ein Abgleichergebnis auf Basis einer automatisierten Auswertung der bereitgestellten Montage- und/oder Anschlussdokumentation und auf Basis der Ist-Spezifikation ermittelt wird. Hierbei kann bspw. eine Differenz zwischen der Ist-Spezifikation und der Montage- und/oder Anschlussdokumentation ermittelt werden. Diese Differenz ist vorzugsweise eine Differenz zwischen dem tatsächlichen zumindest teilweisen Aufbau und dem dokumentierten zumindest teilweisen Aufbau, jeweils zumindest hinsichtlich des Teils der Anlage, und/oder zwischen der tatsächlichen Verbindung und der dokumentierten Verbindung. Die ermittelte Differenz kann sodann im Abgleichergebnis bereitgestellt, vorzugsweise ausgegeben, werden. Hierdurch wird der Vorteil erzielt, dass eine Abweichung zwischen der Dokumentation und dem Ist-Zustand der Anlage, d. h. dem tatsächlichen zumindest teilweisen Aufbau bzw. der tatsächlichen Verbindung, erkannt und ggf. dem Benutzer ausgegeben werden kann. Damit können Arbeiten an der Anlage vereinfacht und zuverlässiger erfolgen.

Die Anschlusselemente können jeweils als Modul und/oder Masterelement ausgebildet sein, welche vorzugsweise zur Verteilung von Energie und/oder Datenströmen dienen. Als Masterelement können die Anschlusselemente ferner zur Datenkommunikation mit sekundären Geräten ausgebildet sein. Vorzugsweise kann zumindest ein Teil der Anschlusselemente und/oder der Geräte jeweils eine Elektronik aufweisen, welche softwarebasierte Funktionen, bevorzugt Automatisierungsfunktionen, aufweist. Die Funktionen sind bspw. Kommunikations- und/oder Steuerungsfunktionen für die Anlage. Um die Funktionen für eine spezifische Anlage zu parametrisieren, kann ggf. eine Geräteeinrichtung vorgesehen sein.

Es ist bspw. eine computer-gestützte Geräteeinrichtung bei der Anlage denkbar. Die Geräteeinrichtung kann z. B. eine Parametrisierung der Geräte und/oder eine Hinterlegung von Spezifikationen umfassen, die die Parametrisierung der Geräte ermöglichen (ähnlich einer Treiberinstallation). Es ist denkbar, dass hierzu ein Bereitstellen von zumindest einer gerätespezifischen Einrichtungsspezifikation für die verbundenen Geräte erfolgt. Anschließend kann eine Übertragung der zumindest einen gerätespezifischen Einrichtungsspezifikation an wenigstens eines der Anschlusselemente, vorzugsweise Masterelemente, und/oder an wenigstens eines der damit verbundenen Geräte vorgesehen sein. Dabei kann die zumindest eine gerätespezifische Einrichtungsspezifikation auf Basis einer automatisierten Auswertung der bereitgestellten Anschlussdokumentation bereitgestellt und/oder übertragen werden. Die bereitgestellte Anschlussdokumentation kann ferner auf Basis der bereitgestellten Installationsvorgabe die Verbindung der Geräte mit den Anschlusselementen, vorzugsweise Masterelementen, dokumentieren.

Die gerätespezifische Einrichtungsspezifikation umfasst z. B. einen Gerätenamen für das jeweilige Gerät, um das Gerät eindeutig oder eineindeutig identifizieren zu können. Weiter kann die gerätespezifische Einrichtungsspezifikation eine Kommunikationsadresse, vorzugsweise eine Netzwerkadresse, bevorzugt eine IP-Adresse umfasst. Auch kann die gerätespezifische Einrichtungsspezifikation eine Gerätebeschreibung, vorzugsweise eine IODD, umfassen, welche bevorzugt Beschreibungsdaten wie Geräteparameter und/oder Eigenschaften des jeweiligen Geräts beschreibt, um eine Parametrisierung des Geräts auf Basis der Gerätebeschreibung zu ermöglichen. Die Beschreibungsdaten umfassen ferner bspw. Spezifikationen zur Geräte-ID und/oder zur IO-Link-Version, die implementiert sind, und/oder eine Angabe einer Zykluszeit der Kommunikation und/oder der Betriebsmodi und/oder zur Datenstruktur für Prozessdaten und/oder zur eindeutigen Identifikation des Geräts und/oder zur Art der Parametrisierung und/oder zur Datenbreite und/oder zur Verarbeitungszeit.

Darüber hinaus ist es denkbar, dass eine Masterelement- und/oder Geräteeinrichtung vorgesehen ist, bei welcher gerätespezifischen Namen bei dem zumindest einen jeweiligen Masterelement und/oder bei den Geräten eingerichtet werden. Dies kann es ermöglichen, dass die gerätespezifischen Namen für die Bereitstellung der Automatisierungsfunktionen und insbesondere für eine Kommunikation zwischen der mindestens einen Steuerungseinrichtung und den Geräten verwendet werden. Die gerätespezifischen Namen sind z. B. device-specific-tags gemäß einer IO-Link Spezifikation. Die Verwendung von gerätespezifischen Namen kann den Vorteil haben, dass die Namen im Gegensatz zu E/A-Adressen das Geräte und/oder seine Funktion(en) semantisch bezeichnen können und daher zur leichteren Programmierung und/oder Wartung beitragen. So können die gerätespezifischen Namen bspw. direkt für eine Steuerungsprogrammierung verwendet werden. Darüber hinaus kann bei einem Anschließen eines der Geräte an einen beliebigen Anschluss eines Anschlusselements, insbesondere Masterelements, dynamisch dem Anschluss der gerätespezifischen Namen des daran angeschlossenen Geräts zugewiesen werden. Es ist somit dann nicht notwendig, dass aufwendig die E/A-Adresse des Anschlusses bei der Steuerungsprogrammierung der Ansteuerung des Geräts zugeordnet wird.

Es können darüber hinaus weitere Möglichkeiten zur Parametrisierung der Geräte, insbesondere in einem Engineering System (ES), vorgesehen sein. Eine erste Möglichkeit besteht bspw. darin, dass das ES die Steuerung, vorzugsweise eine Steuerungseinrichtung, konfiguriert. Hierbei können auch die Anschlusselemente, vorzugsweise E/A-Module, mit ihren Anschlüssen, bevorzugt Ports, vorzugsweise IO-Link-Ports, definiert werden. Ein Software-Tool ("Device-Tool") kann aus dem ES aufgerufen werden und erhält dann vom ES eine temporäre Parameterdatei, um das angeschlossene Gerät zu parametrisieren. Das Software-Tool kann konkret als ein IO-Link Device Tool ausgebildet sein. Ein grundsätzlicher Funktionstest des Sensors oder Aktors ist mithilfe des Tools ebenfalls möglich. Schließlich kann das IO-Link Device Tool die Veränderung von Stell- und Kenngrößen in Sensor oder Aktor ermöglichen, ohne dabei die komplexe SPS-Steuerung der Anlage zu verändern.

Eine weitere Möglichkeit besteht bspw. darin, dass Informationen aus der Gerätebeschreibung, insbesondere IODD, oder aus Datenblättern sowie die zugehörigen Parameter für die Geräte in der Steuerung festgelegt werden. Dies erfordert ggf. die separate Programmierung von IODD-Informationen in Datenbausteine der Steuerung. Eine weitere Möglichkeit besteht bspw. darin, dass das die Gerätebeschreibung wie IODD eines Benutzers in eine GSDML-Datei für die Anlage und/oder eines der Komponenten der Anlage und/oder eines der Anschlusselemente und insbesondere einen IO-Link-Master integriert wird. Die GSDML-Datei kann in der Steuerung hinterlegt werden und von der Steuerung für die Parametrisierung der Geräte genutzt werden. Dabei kann es vorgesehen sein, dass die Struktur, also die Art und Topologie zumindest eines Teils der Anlage/Komponenten/Geräte/Anschlusselemente, im GSDML gespeichert ist, und die Einstellungen zur Parametrisierung in der Steuerung, z. B. einer SPS-Projektdatei, gespeichert werden. Eine weitere Möglichkeit besteht vorzugsweise darin, dass zumindest eines der Anschlusselemente, bevorzugt in der Form von Ethernet-Module und/oder IO-Link-Master-Module, über einen internen Webserver verfügt und besonders bevorzugt wenigstens eine oder mehrere Gerätebeschreibungen, insbesondere IODD(s), darüber direkt in das Anschlusselement eingespielt werden können.

Es ist möglich, dass die Anschlusselemente Ihre Nachbarn "kennen". Die Anschlusselemente, vorzugsweise Feldbusmodule, können ihre Nachbaranschlusselemente über eine Erkennungsfunktion wie über das Protokoll LLDP (Link Layer Discovery Protocol) entdecken. LLDP ermöglicht es den Anschlusselementen, ihre Nachbaranschlusselemente im Netzwerk zu erkennen, indem sie Informationen über ihre Identität, ihre Fähigkeiten und/oder ihre Verbindungsinformationen austauschen. Die Erkennungsfunktion kann auf der Link-Ebene des OSI-Modells (Open Systems Interconnection) eingesetzt werden und es ermöglichen, Netzwerkgeräte zu identifizieren, ohne dass dafür eine manuelle Konfiguration erforderlich ist. Anschlusselemente, die diese Erkennungsfunktion und vorzugsweise LLDP unterstützen, können dabei periodisch (LLDP-) Pakete aussenden, die Informationen über ihre Identität und ihre Verbindungsinformationen enthalten. Andere Anschlusselemente, die diese Pakete empfangen, können die Informationen auslesen und ihre Nachbarn identifizieren. Dies kann den Vorteil haben, dass die Netzwerktopologie zumindest teilweise bekannt gemacht und/oder geprüft werden kann.

Die Anlage kann mehrere Komponenten, vorzugsweise in der Form von Geräten und/oder in der Form von wenigstens einem Anschlusselement für die Geräte, umfassen. Weitere Komponenten können Verbindungsmittel sein, wie Kabel und/oder Steckverbinder, um die Verbindung zwischen den Geräten und dem wenigstens einen Anschlusselement herzustellen.

Die Geräte können zumindest als eines der folgenden Geräte ausgebildet sein:
- Einen Sensor,
- Ein Aktor,
- Eine Lichtschranke,
- Ein binärer Schalter,
- Ein binärer Sensor,
- Ein binärer Aktor,
- Ein IO-Link Device Sensor,
- Ein IO-link Device Aktor.

Die gerätespezifische Einrichtungsspezifikation, insbesondere die Gerätebeschreibung, vorzugsweise in der Form einer IODD, und/oder die Beschreibungsdaten der Gerätebeschreibung, können dazu ausgeführt sein, spezifische Informationen über ein Gerät zu enthalten. Diese Informationen sind beispielsweise Angaben hinsichtlich der Funktionen, Eigenschaften, Konfigurationen, oder Schnittstellen des Geräts. Die Gerätebeschreibung ist bspw. in der Form von einer oder mehreren Dateien vorgesehen. Dabei können die Beschreibungsdaten der Gerätebeschreibung in einer Beschreibungssprache wie XML (Extensible Markup Language), GSDML (Generic Station Description Markup Language) oder DDL (Device Description Language) formuliert sein. Beispiele für Gerätebeschreibungen sind IODD (IO Device Description), FDI (Field Device Integration), ESI (EtherCAT Slave Information) und EDD (Electronic Device Description). Außerdem kann eine Integration der Gerätebeschreibung bzw. der Beschreibungsdaten in eine GSDML-Datei vorgesehen sein.

Zur Parametrisierung kann ggf. auch ein Software-Tool verwendet werden, welches anhand der gerätespezifischen Beschreibungsdaten die Parameter an das Gerät übertragen kann.

Eine weitere Möglichkeit ist die Verwendung einer GSDML-Datei. GSDML steht für "Generic Station Description Markup Language" und ist ein standardisiertes Dateiformat für die Beschreibung wenigstens einer Komponente der Anlage. Dabei können die Gerätebeschreibungen bzw. die Beschreibungsdaten in die GSDML eingefügt und dann einer zentralen Steuerung zur Verfügung gestellt werden. Dies ermöglicht die automatische Parametrisierung der an die Anschlusselemente angeschlossenen Geräte.

Darüber hinaus können die Geräte als analoge und/oder digitale Geräte ausgebildet sein. Es können jeweils mehrere Geräte mit einem Anschlusselement verbunden sein. Jedes der Anschlusselemente kann entsprechend als ein Verteiler für die damit verbunden Geräte ausgeführt sein. Die Geräte können direkt über Kabel und/oder Steckverbinder oder ggf. auch indirekt mit dem Anschlusselement verbunden werden. Die indirekte Verbindung erfolgt bspw. über einen, insbesondere IO-Link-, Analogkonverter und/oder einen, insbesondere IO-Link-, Hub. An den (IO-Link-) Hub können z. B. die Geräte in der Form von binären Standardsensoren angeschlossenen werden. Hierzu können digitale (Standard-) Eingänge/Ausgänge (E/A) am Hub vorgesehen sein.

Das Anschlusselement, insbesondere Masterelement, kann als ein Mastermodul, vorzugsweise IO-Link Master, ausgebildet sein. Gleichzeitig kann das Anschlusselement als Feldbusmodul ausgebildet sein und somit einen Feldbus-Anschluss aufweisen. Dies ermöglicht die Vernetzung mit anderen Anschlusselementen und/oder mit wenigstens oder genau einer Steuerungseinrichtung über den Feldbus. Die Steuerungseinrichtung ist bspw. eine zentrale Steuerung wie eine SPS ("Speicherprogrammierbare Steuerung"). Darüber hinaus kann die Steuerungseinrichtung auch als eine dezentrale Steuerung ausgeführt sein, welche ggf. mit weiteren dezentralen Steuerungen die Steuerungsaufgabe direkt im Feld wahrnimmt. Das Feldbusmodul kann dazu ausgeführt sein, auf Basis der Feldbus-Kommunikation die mit dem Anschlusselement verbundenen Geräte anzusteuern und/oder auszuwerten.

Ein Lesen und Schreiben des Gerätes, insbesondere IO-Link Devices, ist bspw. via CoE (CAN application protocol over EtherCAT) und/oder AoE (Automation Device Protocol over EtherCAT) möglich. Die Ausbildung von zumindest einem Teil der Geräte als IO-Link Devices erlaubt es, dass Informationen wie Prozessdaten, Diagnose- und Parametrierungsdaten digital durch die Geräte übertragen werden. Die Funktionen eines Web-Servers, eines IO-Link Device Tools und IIOT ( "Industrial Internet of Things") können ggf. über eine EoE (Ethernet over EtherCAT) Kommunikation aktiviert werden. Zusätzlich können auch weitere digitale oder analoge Geräte in die Anlage eingebunden werden.

Die Anlage ist vorzugsweise in der Form einer elektrischen und/oder industriellen Anlage und/oder einer elektrischen Maschine und/oder einer industriellen Automatisierungsanlage und/oder einer Produktions- und/oder Förder- und/oder Fertigungsanlage und/oder einer Automobilproduktionsanlage und/oder einer Logistikanlage vorgesehen. Die Anlage kann ferner als eine hydraulische oder eine pneumatische oder eine fluide oder eine mechanische Anlage ausgebildet sein. Bei der Anlage können entsprechend - automatisiert gesteuert - Flüssigkeiten oder Gase durch Schlauch- und/oder Rohrleitungen oder Ventile transportiert oder ein Kühlmittel zugeführt werden oder mechanische Kräfte auf ein Objekt ausgeübt werden, um eine gewünschte Funktion bereitzustellen. Beispiele für solche Anlagen sind eine hydraulische Presse, eine pneumatische Förderanlage, eine Anlage mit einer fluide Kühlmechanik oder eine Zerspanungsanlage oder eine mechanische Fertigungsmaschine. Der Aufbau der Anlage, insbesondere fluide Aufbau, kann Leitungen wie Schlauch- und/oder Rohrleitungen, um technische und produktionsbedingte Anforderungen zu erfüllen und/oder Verbrauchsmaterial zu befördern.

Eine Installationsdokumentation, insbesondere eine Installationsvorgabe, vorzugsweise umfassend einen Schaltplan oder einen mechanischen Plan, bevorzugt in digitaler Form, kann angeben, wie die elektrische, hydraulische, pneumatische, fluide oder mechanische Anlage aufgebaut ist und wie die verschiedenen Komponenten miteinander verbunden/verschaltet sind, um gewünschte Funktionen wie Automatisierungsfunktionen bereitzustellen. Mit anderen Worten kann durch die Installationsvorgabe eine Topologie der Anlage angegeben und insbesondere vorgegeben werden. Dabei kann zwischen einer zentralen und dezentralen Topologie unterschieden werden. In einer zentralen Topologie können die Geräte überwiegend direkt mit einem zentralen Schaltschrank und insbesondere mit einer zentralen Steuerungseinrichtung verbunden sein. In einer dezentralen Topologie hingegen werden mehrere Verteiler, auch Anschlusselemente bezeichnet, verwendet, an denen jeweils nur eine begrenzte Anzahl von Geräten verbunden sein kann. Die Verbindungen zwischen den Geräten gehen dann in der Regel direkt zum räumlich nächstgelegenen Verteiler und können von dort aus entweder direkt an die Steuerungseinrichtung weitergeleitet oder zunächst interpretiert oder umgewandelt werden. Der Unterschied zwischen den beiden Topologien besteht also darin, dass in einer zentralen Topologie überwiegend alle Verbindungen direkt zum Schaltschrank laufen, während in einer dezentralen Topologie mehrere Verteiler verwendet werden, um die Verbindungen mit den Geräten dezentral herzustellen. Entsprechend sollten Komponenten der Anlage, welche üblicherweise im Schaltschrank vorgesehen sind, für das Feld angepasst werden. Komponenten wie Netzgeräte zur Energieversorgung können daher wasser-, staubund/oder feuchtigkeitsgeschützt, d. h. insbesondere IP67 -fähig, ausgebildet sein.

Die Anlage kann eine oder mehrere dezentrale Steuerungseinrichtungen aufweisen. Diese können jeweils nur einen Teil der gesamten Funktionalität, vorzugsweise der Automatisierungsfunktionen, der Anlage bereitstellen und/oder ansteuern. Hierzu können die dezentralen Steuerungseinrichtungen jeweils als eine Komponente ausgebildet sein, die im Feld eingesetzt werden kann. Dies bedeutet vorzugsweise, dass die Steuerungseinrichtungen wasser-, staub- und/oder feuchtigkeitsgeschützt, d. h. insbesondere IP67 -fähig, ausgebildet sind. Weiter kann die jeweilige dezentrale Steuerungseinrichtung als Funktionsmodul ausgebildet sein und entsprechend mit weiteren Funktionsmodulen wie einem Netzgerät zur Energieversorgung und/oder zumindest einem der Anschlusselemente, insbesondere Module, und/oder einem Mastermodul wie einem IO-Link-Master und/oder einem Netzwerk-Switch und/oder einer Motor- bzw. Servoansteuerung modular verbunden werden. Dieser modulare Verbund kann durch eine entsprechende Dichtungsanordnung ebenfalls wasser-, staub- und/oder feuchtigkeitsgeschützt, d. h. insbesondere IP67 -fähig, ausgebildet sein. Die jeweilige dezentrale Steuerungseinrichtung kann ferner einen Industrie-PC umfassen und/oder ihre Steuerungsaufgaben durch eine Kommunikation mit den Geräten über die Anschlusselemente bzw. über einen Feldbus vornehmen.

Die Anlage ist kann eine Fertigungslinie und/oder Fördertechnik und/oder Lager- und Kommissioniersysteme und/oder automatisierte Sortiersysteme und/oder Software zur Steuerung und Überwachung von Prozessen aufweisen. Weiter kann die Anlage mehrere Komponenten aufweisen. Die Komponenten können Geräte, insbesondere Betriebsmittel wie Aktoren und/oder Sensoren, und/oder Steuerungseinrichtungen und/oder Antriebe oder Schaltanlagen und/oder Ventilinseln und/oder dergleichen umfassen. Ferner können die Komponenten auch Anschlusselemente umfassen, welche als Verteiler für ein oder mehrere der Geräte dienen können. Zusätzlich können Verbindungsmittel wie Kabel oder Steckverbinder oder dergleichen zur Verbindung der Komponenten der Anlage verwendet werden.

Als Verbindungsmittel können Kabel und/oder Steckverbinder nach Standards wie M12, M8 oder M5 sowie drei-adrige Kabel in Frage kommen. Dies kann den Vorteil haben, dass eine schnelle und einfache Montage der Sensoren und Aktoren gewährleistet wird. Die Verbindung der Verbindungsmittel kann bspw. über eine Bajonett- oder Schraubverbindung erfolgen. Die Kontakte der Steckverbinder können in einer rechteckigen oder runden Ausführung angeordnet sein und unterschiedliche Materialien wie Messing oder Edelstahl aufweisen. Die Steckverbinder können außerdem über eine Schutzart wie IP67 verfügen, um eine zuverlässige Funktion in rauen Umgebungen zu gewährleisten.

Im Rahmen der Erfindung kann ein Anschlusselement einen Verteiler und bezeichnen, welcher zur Verbindung im Feld und/oder dezentralen Verschaltung von Geräten wie Aktoren, Sensoren und Maschinen in der Anlage dient. Dabei kann das Anschlusselement als ein Feldbusmodul ausgebildet sein, welches über einen Feldbus mit einer zentralen Steuerungseinrichtung wie einer SPS (Speicherprogrammierbaren Steuerung) und/oder mit wenigstens einer dezentralen Steuerungseinrichtung verbunden sein kann. Feldbusmodule ermöglichen damit die Kommunikation zwischen der Steuerungseinrichtung und den Geräten unter Verwendung eines Feldbusprotokolls wie PROFIBUS, PROFINET, CANopen oder EtherCAT. Es können an dem Anschlusselement ferner mehrere Geräte angeschlossen werden, ggf. auch über IO-Link und insbesondere, um auf Basis/mittels eines empfangenen Feldbussignals die Geräte anzusteuern und/oder auszulesen. Auf diese Weise können die Automatisierungsfunktionen der Geräte dezentral bereitgestellt werden.

Eine weitere mögliche Variante eines Anschlusselements kann ggf. auch direkt ein elektrisches Steuersignal und/oder Sensorsignal zwischen der Steuerungseinrichtung und dem Gerät weiterleiten. Ferner kann das Anschlusselement als ein I/O-Anschlusselement ausgebildet sein, bei dem die angeschlossenen Geräte nicht oder nicht nur über einen Feldbus, sondern (auch) über digitale oder analoge Ein- und Ausgänge über das Anschlusselement mit der Steuerungseinrichtung verbunden werden. Das Anschlusselement dient damit als Schnittstelle zwischen Steuerungseinrichtung und Geräten wie Sensoren, Aktoren und Maschinen und kann eine Umwandlung und Verarbeitung von Signalen aus der Steuerungseinrichtung in für die Geräte nutzbare Signale und/oder umgekehrt vornehmen. Die Ein- und Ausgänge ermöglichen dabei eine Übertragung von Prozessdaten, um die Funktionalität der Anlage bereitzustellen.

Optional kann es vorgesehen sein, dass das jeweilige Anschlusselement eine Mehrzahl von Leuchtmitteln, vorzugsweise LEDs, aufweist, welche jeweils einem Anschluss, vorzugsweise Port, oder mehreren Anschlüssen des Anschlusselements zugeordnet sind und einen Betriebszustands des jeweiligen Anschlusses / Ports / der Ports anzeigen.

Es kann vorgesehen sein, dass wenigstens ein Anschlusselement mit zumindest einem der Geräte durch ein Kommunikationssystem zur digitalen und insbesondere Punkt-zu-Punkt Kommunikation verbunden ist. Ein konkretes Beispiel für ein solches Kommunikationssystem ist IO-Link. Unter IO-Link wird insbesondere ein Kommunikationssystem zur Anbindung intelligenter Sensoren und Aktoren an ein Automatisierungssystem bezeichnet, welches in der Norm IEC 61131-9 unter der Bezeichnung Single-drop digital communication interface for small sensors and actuators (SDCI) normiert ist. Mit anderen Worten kann wenigstens eines der Anschlusselemente daher als ein Anschlusselement für dieses Kommunikationssystem, insbesondere als ein IO-Link-Modul, ausgebildet sein. Dies bedeutet, dass das Anschlusselement dazu ausgebildet sein kann, eine Kommunikation zwischen dem Anschlusselement und den daran angeschlossenen (verbundenen) Geräten über das Kommunikationssystem und vorzugsweise über den IO-Link-Standard vorzunehmen.

IO-Link ermöglicht eine digitale Kommunikation mit den Geräten und bietet eine hohe Flexibilität bei der Anbindung von Geräten unterschiedlicher Hersteller. Das Anschlusselement kann dabei als IO-Link-Master (Masterelement) oder IO-Link-Device ausgebildet sein und ermöglicht somit eine einfache Integration von IO-Link-Geräten in die dezentrale Verschaltung der Anlage. Durch den Einsatz von IO-Link können zudem umfangreiche Diagnose- und Parametrisierungsmöglichkeiten genutzt werden, um eine effiziente und zuverlässige Steuerung der Anlage zu gewährleisten. Darüber hinaus kann das Anschlusselement eine Feldbusschnittstelle aufweisen (und daher gleichzeitig auch als Feldbusmodul ausgebildet sein), um bspw. Steuerungsbefehle und/oder eine Kommunikation über einen Feldbus mit einer Steuerungseinrichtung und/oder weiteren Anschlusselementen zu ermöglichen.

Das Kommunikationssystem umfasst bspw. einen Master, vorzugsweise Masterelement, insbesondere IO-Link-Master, und einen oder mehrere Geräte, also Sensoren oder Aktoren, die zur Kommunikation mit dem Master geeignet sind. Dies können konkret IO-Link-Devices sein. Der Master stellt insbesondere die Schnittstelle zur überlagerten Steuerung, d.h. einer dezentralen oder zentralen Steuerungseinrichtung wie einer SPS, zur Verfügung und steuert die Kommunikation mit den angeschlossenen Geräten. Der Master kann einen oder mehrere Ports, insbesondere IO-Link-Ports, aufweisen, an dem jeweils nur ein Gerät angeschlossen werden kann. Dies kann auch ein Hub sein, der den Anschluss von klassisch schaltenden Sensoren und Aktoren ermöglicht.

Das Gerät, insbesondere IO-Link-Gerät, kann eine bidirektionale Kommunikation mit dem Anschlusselement ermöglichen und/oder als ein (intelligenter) Sensor, Aktor, Hub, oder auch eine Mechatronik-Komponente wie z. B. ein Greifer oder ein Netzteil sein. Das Gerät kann dabei Identifikationsdaten, wie z. B. eine Typbezeichnung und eine Seriennummer oder Parameterdaten (z. B. Empfindlichkeiten, Schaltverzögerungen oder Kennlinien, bereitstellen, die über das Kommunikationssystem und insbesondere IO-Link-Protokoll lesbar bzw. schreibbar sind. Das Ändern der Parameter kann vorteilhafterweise durch eine Parametrisierung anhand von einer Gerätebeschreibung erfolgen. Weiter können die Geräte in der Lage sein, detaillierte Diagnoseinformationen zu liefern. Die Parameter der Geräte wie Sensoren und Aktoren können geräte- und technologiespezifisch sein. Daher können für die jeweiligen Geräte Parameterinformationen vorgesehen sein, vorzugsweise in Form einer Gerätebeschreibung wie IODD (IO Device Description) mit der Beschreibungssprache XML.

Eine mögliche Erweiterung für das Kommunikationssystem IO-Link ist IO-Link Safety. Diese Erweiterung bietet eine zusätzliche Sicherheitskommunikationsschicht auf den vorhandenen Master- und Device-Schichten an, wodurch diese zu "FS-Master" und "FS-Device" werden.

Eine weitere mögliche Erweiterung für das Kommunikationssystem IO-Link ist IO-Link Wireless, welches eine physikalische Erweiterung des Systems auf Basis von IEEE 802.15.1 darstellt. Ein IO-Link Wireless Master verhält sich dabei wie ein Master im übergeordneten System, während die IO-Link Wireless Devices über virtuelle Ports über eine Funkstrecke angebunden sind.

Das Kommunikationssystem kann eine Punkt-zu-Punkt Kommunikation zwischen dem Master/Masterelement und den Geräten bereitstellen. Das Kommunikationssystem ermöglicht damit eine direkte Verbindung zwischen dem Master/Masterelement und den Geräten, ohne dass eine Vermittlung durch andere Systeme notwendig ist. Dadurch wird eine schnelle und zuverlässige Kommunikation, insbesondere feldbusunabhängig, gewährleistet.

Es kann ferner möglich sein, dass die bereitgestellte Montage- und/oder Anschlussdokumentation aus einer automatisierten Dokumentation von Installationshandlungen, insbesondere einer computer-geführten Installation und/oder Dokumentation, resultiert. Hierbei kann ein Benutzer für die Durchführung der Installationshandlungen schrittweise durch einen Computer zum zumindest teilweisen Aufbau der Anlage, zumindest hinsichtlich des Teils der Anlage, und/oder zur Verbindung der Geräte mit den Anschlusselementen angeleitet werden. Ebenfalls kann hierbei für die jeweilige Installationshandlung eine manuelle Bestätigung des Benutzers erfasst werden, dass die Installationshandlung ordnungsgemäß durchgeführt worden ist. Dies ermöglicht es, auf dieser Basis die Dokumentation vorzunehmen. Dabei kann die Anleitung und/oder die Bestätigung und/oder die Dokumentation unter Angabe zumindest eines konkreten Anschlusses, insbesondere eines Ports und/oder einer Klemme, für zumindest eines der Anschlusselemente erfolgen, an welchem zumindest eines der Geräte angeschlossen worden ist. Weiter kann dabei zumindest dadurch bei der bereitgestellten Montage- und/oder Anschlussdokumentation die Verbindung der Geräte mit den Anschlusselementen auf Basis der bereitgestellten Installationsvorgabe dokumentiert sein, dass für die schrittweise Anleitung durch den Computer die Installationsvorgabe ausgewertet wird und/oder die Verbindung in Bezug auf die Installationsvorgabe dokumentiert wird. Die Dokumentation der jeweiligen Verbindung wird vorzugsweise unter Angabe des konkreten Anschlusses/Ports und/oder einer Artikel- und/oder Serien- und/oder Herstellerkennzeichnung und/oder einer Netzwerk-, vorzugsweise MAC-Adresse, und/oder einer räumlichen Koordinate (insbesondere des Einbauorts in der mechanischen Darstellung, vorzugsweise Modell, der Anlage) des verbundenen Geräts und/oder des Moduls vorgenommen. Alle oder ein Teil dieser Angaben kann dabei durch den Benutzer bestätigt werden, bevor sie hinterlegt werden. Dies ermöglicht es, das Gerät anhand der hinterlegten Angaben eindeutig oder eineindeutig zu identifizieren, um bspw. im Anschluss eine Einrichtungsspezifikation an das Gerät zu übertragen.

Die jeweilige Installationshandlung ist vorzugsweise ein Installationsschritt, wie das Verbinden wenigstens eines Gerätes mit wenigstens einem Anschluss eines Anschlusselements, welcher bei der Installation und/oder Wartung und/oder Modernisierung und/oder dergleichen durchgeführt wird. Dabei können die Anschlusselemente Klemmkästen, Netzgeräte, Sicherungen, Anschlusskarten, Signalwandler, Motorsteuergeräten, Steuergeräte und/oder dergleichen umfassen.

Es kann möglich sein, dass zum Verbinden ein T-Stück zum Einsatz kommt. Es kann bspw. verwendet werden, um zwei Geräte an einem Anschluss/Port anzuschließen, oder umgekehrt, um zwei Anschlüsse/Ports zum Anschluss mit einem Gerät zu nutzen. Das T-Stück kann beispielsweise in Rohrleitungssystemen, pneumatischen oder hydraulischen Systemen oder in elektronischen Schaltungen eingesetzt werden. Es ermöglicht eine effiziente und zuverlässige Verbindung zwischen den Anschlusselementen und den Geräten.

Es ist vorgesehen, dass im Rahmen der Erfindung die Ermittlung des Abgleichergebnisses den folgenden Schritt umfasst, welcher automatisiert, vorzugsweise während und/oder nach einer automatisierten Dokumentation von Installationshandlungen, durchgeführt wird: Prüfen, dass der dokumentierte zumindest teilweise Aufbau, zumindest hinsichtlich des Teils der Anlage, und die dokumentierte Verbindung der Geräte mit den Anschlusselementen mit dem tatsächlichen zumindest teilweisen Aufbau und einer tatsächlichen Verbindung der Geräte mit den Anschlusselementen übereinstimmt.

Dabei wird die Übereinstimmung auch hinsichtlich konkreter Anschlüsse, insbesondere Ports und/oder Klemmen, der Anschlusselemente, an welchen die Geräte anzuschließen sind, geprüft. Mit anderen Worten kann ein Topologieabgleich auf E/A Ebene durchgeführt werden.

Beispielsweise kann es vorgesehen sein, dass die Bereitstellung der Ist-Spezifikation zumindest teilweise umfasst: Ermitteln der tatsächlichen Verbindung der Geräte mit den Anschlusselementen zumindest teilweise durch eine automatisierte Abfrage an den Anschlusselementen, vorzugsweise über eine Kommunikationsschnittstelle und/oder einen Feldbus. Dies kann den Vorteil haben, dass der Installationsprozess beschleunigt wird und die Fehlerquote minimiert wird, da die Überprüfung der Verbindungen automatisiert werden kann. Es ist außerdem möglich, dass die automatisierte Abfrage der Anschlusselemente auch dazu genutzt wird, um mögliche Fehler in der Verkabelung zu identifizieren und anzuzeigen. Dadurch wird eine schnelle Fehlerbehebung ermöglicht und die Betriebszeit der Anlage erhöht.

Weiter ist es denkbar, dass die Bereitstellung der Ist-Spezifikation zumindest teilweise umfasst: Auswerten eines Einbauorts wenigstens eines der verbundenen Geräte auf Basis eines mechanischen Modells, vorzugsweise MCAD. Hierdurch kann die Installation der Anlage präziser und genauer geplant werden, was Fehler und Verzögerungen bei der Installation vermeiden kann. Die Verwendung eines mechanischen Modells, insbesondere MCAD, ermöglicht eine detaillierte und realistische Darstellung der Anlage und der verbundenen Geräte, was die Prüfung und Installation erleichtert. Darüber hinaus ermöglicht die Auswertung des Einbauorts eine funktionsbezogene Prüfung, indem eine Referenz ausgewertet wird, in welcher den unterschiedlichen Einbauorten die Funktonen der Geräte zugeordnet sein.

Weiter ist es denkbar, dass die Bereitstellung der Ist-Spezifikation zumindest teilweise umfasst: Auswerten einer visuellen Aufzeichnung zumindest des Teils der Anlage. Durch die Auswertung der visuellen Aufzeichnung kann der tatsächliche Einbauort der Geräte bestimmt werden, um eine funktionsbezogene Prüfung durchzuführen. Hierbei kann auch die voranstehend beschriebene Referenz herangezogen werden. Eine Kamera kann dabei zur visuellen Aufzeichnung eingesetzt werden.

Weiter ist es denkbar, dass die Bereitstellung der Ist-Spezifikation zumindest teilweise umfasst: Elektronische Auswertung von Komponenten der Anlage, vorzugsweise einer Ausgabe der Komponenten. Dadurch können mögliche Fehlerquellen frühzeitig erkannt und behoben werden, was zu einer höheren Zuverlässigkeit und Verfügbarkeit der Anlage führt. Die elektronische Auswertung kann z. B. dadurch erfolgen, dass an den analogen oder digitalen Anschlüssen eines Anschlusselements eine elektrische Erfassung erfolgt oder Sensoren angeschlossen werden, die den Zustand der angeschlossenen Geräte ermitteln. Die erfassten Signale/Daten können dann an eine zentrale Steuereinheit übermittelt werden, die eine Auswertung der Daten durchführt.

Weiter ist es denkbar, dass die Bereitstellung der Ist-Spezifikation zumindest teilweise umfasst: Auswerten einer Benutzereingabe. Damit kann eine manuelle Erfassung des tatsächlichen Aufbaus möglich sein.

Gemäß einem weiteren Vorteil kann vorgesehen sein, dass das Ermitteln der tatsächlichen Verbindung zumindest den folgenden Schritt umfasst: Durchführen einer automatischen Erkennung zumindest eines Teils einer tatsächlichen Topologie der Anlage. Hierzu kann bspw. eine Topologie-Information von den jeweiligen Anschlusselementen empfangen werden, welche vorzugsweise zumindest eine der folgenden Informationen umfasst:
- Eine Angabe von Anschlüssen, insbesondere Ports und/oder Klemmen, des Anschlusselements, an denen Geräte angeschlossen sind,
- Eine Kennung eines angeschlossenen Geräts, vorzugsweise mit Angabe des Anschlusses, vorzugsweise Ports und/oder Klemme, des Anschlusselements, an welchem das Gerät angeschlossen ist, und/oder mit Angabe einer Kennzeichnung des Geräts,
- Eine Angabe von Nachbaranschlusselementen, die in einem gemeinsamen Netzwerk, vorzugsweise Feldbus, benachbart zum Anschlusselement angeschlossen sind, und die bevorzugt auf Basis einer Kommunikation des Anschlusselements mit den Nachbaranschlusselementen, besonders bevorzugt mittels LLDP, ermittelt wird.

Dies ermöglicht eine zuverlässige Ermittlung des tatsächlichen Aufbaus.

Des Weiteren ist es denkbar, dass das Ermitteln der tatsächlichen Verbindung zumindest die folgenden Schritte umfasst:
- Initiieren einer Aufforderung an einen Benutzer, eine definierte Ausgabe zumindest eines der Geräte auszulösen,
- Bestimmten der tatsächlichen Verbindung für das Gerät, insbesondere des konkreten Anschlusses des Anschlusselements, an welchem das Gerät angeschlossen ist, anhand der ausgelösten Ausgabe.

Durch eine manuelle Handlung wie eine Handbewegung oder andere Interaktion des Benutzers kann eine Signalausgabe eines Geräts wie eines Sensors ausgelöst werden, um zu ermitteln, ob das Gerät/der Sensor am vorgegebenen Anschluss angeschlossen wurde. Des Weiteren kann die Auslösung durch eine grafische Ausgabe aufgefordert werden, bei der die Handlung grafisch und insbesondere animiert dargestellt wird. Anschließend können die Anschlusselemente für eine definierte Zeit überwacht werden, um die definierte Ausgabe zu erfassen und die tatsächliche Verbindung des Geräts, insbesondere der konkrete Anschluss des Anschlusselements, an welchem das Gerät angeschlossen ist, anhand der ausgelösten Ausgabe zu bestimmen.

Des Weiteren ist es denkbar, dass die Prüfung während einer automatisierten Dokumentation von Installationshandlungen regelmäßig und/oder nach jeder Bestätigung einer ordnungsgemäßen Durchführung der Installationshandlung und/oder manuell durch eine Benutzereingabe und/oder vor der Inbetriebnahme initiiert wird. Die Prüfung der Anschlusselemente kann mit anderen Worten parallel zur Installation oder zu beliebigen Zeitpunkten erfolgen.

Vorteilhafterweise kann im Rahmen der Erfindung vorgesehen sein, dass die Ermittlung des Abgleichergebnisses umfasst: Zuordnen der dokumentierten Verbindung der Geräte mit den Anschlusselementen gemäß der bereitgestellten Montage- und/oder Anschlussdokumentation zu der vorgegebenen Verbindung der Geräte mit den Anschlusselementen gemäß der Installationsvorgabe, um die vorgegebene Verbindung um eine Anschlussspezifikation der Montage- und/oder Anschlussdokumentation zu erweitern, welche die konkreten Anschlüsse, vorzugsweise Ports, der Anschlusselemente spezifiziert, an welchen die dokumentierte Verbindung der Geräte erfolgt ist. Auf diese Weise kann mit anderen Worten der Soll-Plan aktualisiert werden. Die Zuordnung der dokumentierten Verbindung gemäß der bereitgestellten Anschlussdokumentation zu der vorgegebenen Verbindung gemäß der Installationsvorgabe kann neben einer Hinterlegung der Ports, an welchen die Geräte angeschlossen wurden, auch eine Angabe der Seriennummer und/oder MAC-Adresse des Moduls und/oder Gerätes umfassen. Weiter kann dabei auch als eine weitere Angabe eine räumliche Position in einem mechanischen Plan der Anlage hinterlegt werden, an welcher ein jeweiliges Gerät angeordnet wurde. Hierzu kann, nachdem ein Modul und/oder ein Gerät in der Anlage angeordnet, d. h. verbaut, worden ist, dieser Installationsschritt durch den Benutzerbestätigt werden und dadurch ausgelöst werden, dass eine entsprechende Hinterlegung der Angaben erfolgt.

Außerdem ist es von Vorteil, wenn die Ermittlung des Abgleichergebnisses einen Vergleich umfasst von
- der dokumentierten Verbindung der Geräte mit den Anschlusselementen gemäß der Montage- und/oder Anschlussdokumentation
mit
- der vorgegebenen Verbindung der Geräte mit den Anschlusselementen gemäß der Installationsvorgabe.

Dies kann es ermöglichen, dass Abweichungen zwischen der dokumentierten und vorgegebenen Verbindung erkannt und über das Abgleichergebnis ausgegeben werden.

Zudem ist im Rahmen der Erfindung denkbar, dass das Abgleichergebnis umfasst:
- eine Angabe wenigstens eines oder mehrerer konkreter Anschlüsse der Anschlusselemente, an welchem die dokumentierte Verbindung zumindest eines der Geräte erfolgt ist, vorzugsweise durch eine Angabe einer jeweiligen Ein- und/oder Ausgabeadresse für die Anschlüsse der Anschlusselemente, und/oder
- ein Prüfergebnis, welches angibt, ob eine tatsächliche Verbindung des Geräts an den jeweiligen konkreten Anschluss vorliegt und/oder erfolgreich geprüft worden ist.

Auf diese Weise kann die Prüfung effizient und vorzugsweise auf E/A-Ebene durchgeführt werden.

Es kann weiter möglich sein, dass die Ermittlung des Abgleichergebnisses umfasst: Auflösen von Uneindeutigkeiten bei einer Zuordnung der dokumentierten Verbindung der Geräte mit den Anschlusselementen gemäß der bereitgestellten Montage- und/oder Anschlussdokumentation zu der vorgegebenen Verbindung der Geräte mit den Anschlusselementen gemäß der Installationsvorgabe. Dabei können die Uneindeutigkeiten insbesondere dadurch resultieren, dass mehrere baugleiche Geräte an einem oder mehreren Anschlusselementen angeschlossen sind. Zur Auflösung der Uneindeutigkeiten kann eine räumliche Information über einen tatsächlichen Einbauort der baugleichen Geräte ausgewertet werden, vorzugsweise durch einen Vergleich mit einem mechanischen Modell der Anlage. Mit anderen Worten kommt es bei baugleichen Geräten auf die Funktion und damit auf den Einbauort an. Die Funktion kann somit durch die Heranziehung von MCAD ermittelt werden. Bspw. werden durch entsprechende Installationshandlungen mehrere baugleiche Geräte, wie Lichtschranken zur Überwachung von unterschiedlichen Bereichen, an das Anschlusselement an unterschiedlichen Anschlüssen verbunden. Um daraufhin festzustellen, welches der in der Installationsvorgabe vorgegebenen Geräte tatsächlich mit einem der Anschlüsse verbunden wurde, reicht eine Auswertung von Kennzeichen des Gerätes am Anschluss daher nicht aus. Zusätzlich wird daher der Einbauort der Geräte herangezogen.

Auch ist es optional denkbar, dass die Montage- und/oder Anschlussdokumentation spezifiziert, welche Geräte bei der Installation und/oder bei einer Installationshandlung an welches der Anschlusselemente der Anlage und/oder in welcher Reihenfolge die Geräte und/oder mit welcher Abweichung von der Installationsvorgabe die Geräte an die Anschlusselemente angeschlossen wurden. Dies kann den Vorteil haben, dass die Installation der Anlage schneller und effizienter durchgeführt werden kann, da die Montage- und Anschlussdokumentation eine klare Überprüfung für die Installation ermöglicht.

Ebenfalls Gegenstand der Erfindung ist eine Vorrichtung zur Datenverarbeitung, umfassend Mittel zur Ausführung der Schritte des erfindungsgemäßen Verfahrens. Damit bringt die erfindungsgemäße Vorrichtung die gleichen Vorteile mit sich, wie sie ausführlich mit Bezug auf ein erfindungsgemäßes Verfahren beschrieben worden sind.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Als der Computer kann eine Datenverarbeitungsvorrichtung, bspw. die erfindungsgemäße Vorrichtung, vorgesehen sein, welche das Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls ist es denkbar, dass der Computer zumindest einen integrierten Schaltkreis wie einen Mikroprozessor oder eine Anwendungsspezifische integrierte Schaltung (ASIC) oder ein Anwendungsspezifisches Standardprodukt (ASSP) oder einen digitalen Signalprozessor (DSP) oder einen Field Programmable Gate Array (FPGA) oder dergleichen umfasst. Der Computer kann ferner wenigstens eine Schnittstelle zum Datenaustausch, z. B. eine Ethernet-Schnittstelle oder eine Schnittstelle für LAN (Local Area Network) oder WLAN (Wireless Local Area Network) oder System-on-a-Chip (SoC) oder eine andere Funkschnittstelle wie Bluetooth oder Nahfeldkommunikation (NFC) aufweisen. Ferner kann der Computer als ein oder mehrere Steuergeräte, d. h. auch als ein System aus Steuergeräten, ausgeführt sein. Der Computer kann bspw. auch in einer Cloud und/oder als ein Server vorgesehen sein, um über die Schnittstelle die Datenverarbeitung für eine lokale Anwendung zur Verfügung zu stellen. Auch ist es möglich, dass der Computer als ein mobiles Gerät, wie ein Smartphone, ausgeführt ist.

Ebenfalls Gegenstand der Erfindung kann ein computerlesbares Speichermedium sein, welches das erfindungsgemäße Computerprogramm umfasst. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung einer dezentralen Topologie.
- Fig. 2: eine perspektivische Darstellung eines Anschlusselements.
- Fig. 3: eine beispielhafte Detaildarstellung des Bereichs A aus Fig. 2.
- Fig. 4: Teile einer Installationsvorgabe.
- Fig. 5: ein Computer, eine grafische Benutzeroberfläche und ein Lesegerät.
- Fig. 6: eine schematische Visualisierung eines Verfahrens gemäß Ausführungsvarianten der Erfindung.

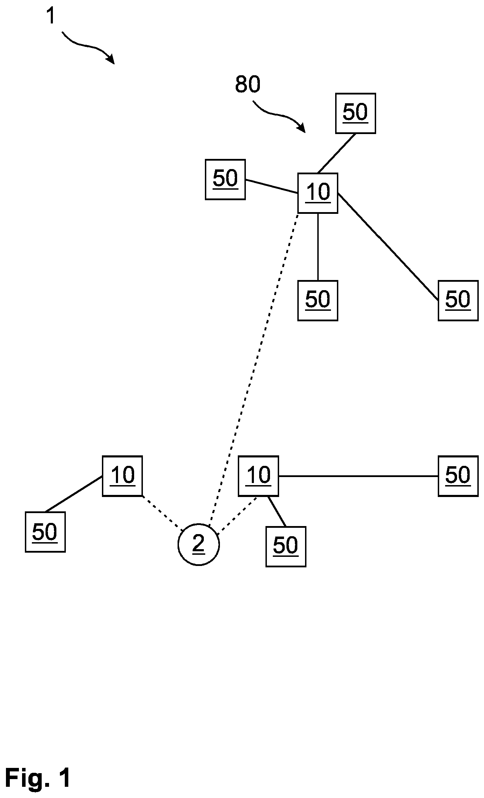

In Fig. 1 ist eine beispielhafte dezentrale Topologie einer industriellen Anlage 1 dargestellt. Es ist eine Steuerungseinrichtung 2 gezeigt, die als zentrale (SPS) oder als eine von mehreren dezentralen Steuerungseinrichtungen 2 ausgeführt sein kann. Weiter sind mehrere Anschlusselemente 10, vorzugsweise Module 10, dargestellt, die mit der Steuerungseinrichtung 2 über ein Kommunikationssystem wie einen Feldbus (gestrichelte Linie) verbunden sind.

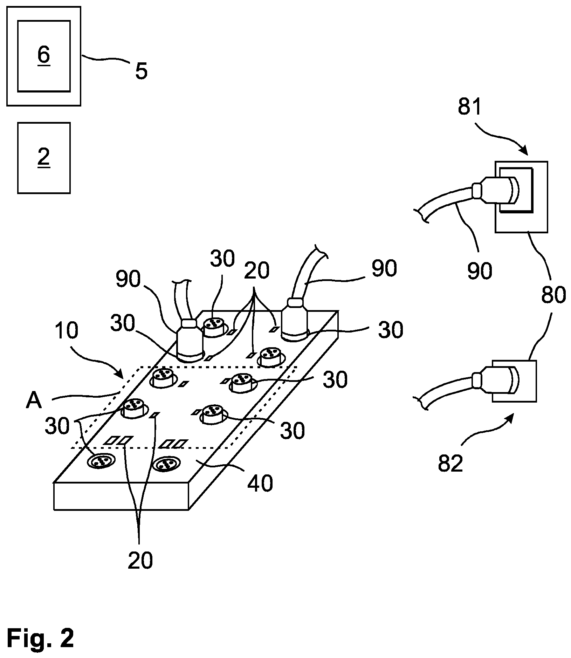

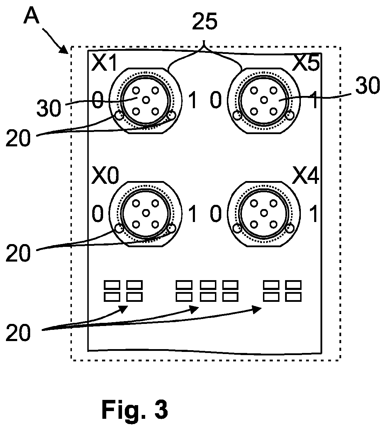

Des Weiteren sind zur Bereitstellung von Automatisierungsfunktionen mehrere Geräte 50 vorgesehen, die mit den Anschlusselementen 10 im Feld und/oder dezentral verbunden sind. In Fig. 2 und 3 sind die jeweiligen Anschlusselemente 10 mit weiteren beispielhaften Einzelheiten dargestellt. Mit jedem der Anschlusselemente 10 können dabei ein oder mehrere der Geräte 50 verbunden sein. Hierzu werden die Geräte 50 insbesondere über Verbindungsmittel 90 wie Kabel und/oder Steckverbinder an entsprechende Anschlüsse 30, insbesondere Ports 30, der Anschlusselemente 10 angeschlossen. Die Anschlusselemente 10 dienen auf diese Weise zur Verbindung der jeweils damit verbundenen Geräte 50 mit der Steuerungseinrichtung 2 und/oder zur Verteilung einer Daten- und/oder Signalübertragung an die jeweils damit verbundenen Geräte 50.

Die Geräte 50 können z. B. Aktoren 81 oder Sensoren 82 sein. Die Verbindung zwischen den Anschlusselementen 10 und zumindest einen Teil der Geräte 50 kann eine bidirektionale Punkt-zu-Punkt Verbindung sein, vorzugsweise über ein Kommunikationssystem zur digitalen Kommunikation wie IO-Link. Die Verbindung zwischen den Anschlusselementen 10 und zumindest einem Teil der Geräte 50 kann ferner eine analoge und/oder digitale Verbindung sein. Damit ermöglichen es die Anschlusselemente 10, dass verschiedene Verbindungsarten zum Anschluss der Geräte 50 verwendet werden können. Es ist möglich, dass die Anschlusselemente 10 entsprechend den verschiedenen Verbindungsarten auch daran angepasste, verschiedene Anschlüsse 30, insbesondere Ports 30, aufweisen können. Die Anschlüsse 30 können an einem Gehäuse 40 des Anschlusselements 10 angeordnet sein.

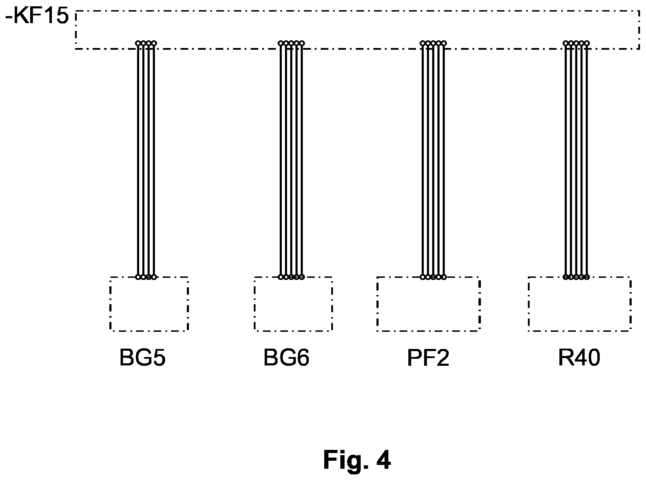

In Fig. 4 ist ein beispielhafter Auszug aus einem digitalen Schaltplan dargestellt, welcher Teil der bereitgestellten Installationsvorgabe sein kann. Die Installationsvorgabe kann vorgesehen sein, um eine elektrische Verschaltung für die Anlage 1 vorzugeben, bei welcher Geräte 50 und Anschlusselemente 10 zur Bereitstellung von Automatisierungsfunktionen im Feld und/oder dezentral miteinander elektrisch verbunden sind.

Es ist denkbar, dass vor der Installation der Anlage 1 zwar eine Topologie der Anlage 1 über die Installationsvorgabe bekannt ist, jedoch nicht, welches konkrete Anschlusselement mit welchem konkreten Gerät über welches Verbindungsmittel 90 verbunden ist. Damit ist gemeint, dass vor der Installation zwar gattungsgemäß die benötigten Komponenten 80 durch die Installationsvorgabe bekannt sein können, die (ein)eindeutige Zuordnung zu konkreten Komponenten 80 jedoch noch nicht erfolgt ist. Bspw. ist in Fig. 1 dargestellt, dass jeweils ein oder mehrere der Geräte 50 mit einem jeweiligen Anschlusselement 10 verbunden sein können. Bei der Installation ist es dann möglich, dass das Anschlusselement 10 aus einem von mehreren und ggf. auch die Geräte 50 aus einem oder mehreren gattungsgemäßen Komponenten 80 ausgewählt werden.

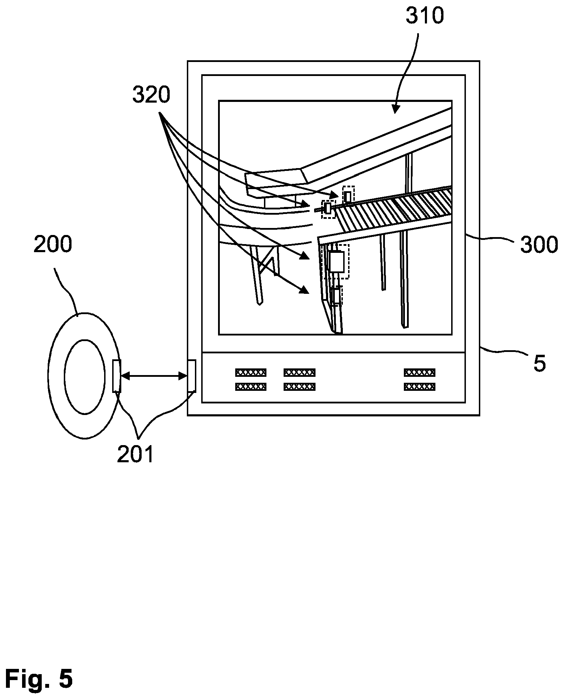

Um die Installation und Dokumentation - sowie auf Basis der Dokumentation auch eine Geräteeinrichtung und/oder Konfiguration und/oder Programmierung einer Steuerung - zu vereinfachen, kann die Installation wie folgt durch einen Computer unterstützt werden. Hierbei kann neben der Anleitung von Installationsschritten auch gleichzeitig die Anschlussdokumentation durch eine automatische Dokumentation der Installationsschritte erstellt werden. Der beispielhafte Ablauf ist wie folgt:
a. Zunächst erfolgt ein Initiieren von Ausgaben an einen Benutzer, durch welche der Benutzer schrittweise zur Durchführung von Installationsschritten angeleitet wird (s. die grafische Benutzeroberfläche in Fig. 5). Die Installationsschritte, auch Installationshandlungen bezeichnet, können ein Auswählen, ein Anbringen und ein Verbinden von Geräten 50 und/oder Anschlusselementen 10 und/oder Verbindungsmitteln 90 umfassen. Bspw. wird der Benutzer zum Auswählen einer Komponente 80, wie eines der Anschlusselemente 10 oder eines Verbindungsmittels 90, aufgefordert. Zur Auswahl scannt der Benutzer einen Identifikator wie einen maschinenlesbaren Code an der Komponente 80 über ein Lesegerät 200 wie einen Handscanner ein. Das Lesegerät 200 kann eine Schnittstelle 201, z. B. eine Funkschnittstelle, aufweisen, um auf Basis des eingescannten Identifikators eine Kennzeichnung der Komponente 80 an eine entsprechende Schnittstelle 201 des Computers 5 zu übertragen.
b. Der Computer 5 kann anhand der übertragenen Kennzeichnung einen oder mehrere mögliche Einbauorte 320 oder (falls ein Verbindungsmittel 90 ausgewählt wurde) Anschlusses 30 / Ports 30 der Anschlusselemente 10 in der Anlage 1 identifizieren. Hierzu kann in der Installationsvorgabe nach entsprechend geeigneten Stellen gesucht werden. Die Installationsvorgabe kann hierzu in digitaler Form sowohl einen elektrischen Schaltplan als auch eine damit verknüpfte mechanische und/oder dreidimensionale Darstellung der Anlage 1 aufweisen. In einer Visualisierung der räumlichen, insbesondere mechanischen und/oder dreidimensionalen, Darstellung 310 der Anlage 1 können dann auf einer Benutzeroberfläche 300 die möglichen Einbauorte 320 angezeigt werden. Falls das Verbindungsmittel 90 ausgewählt wurde, kann auch ein Leuchtmittel 20 aufleuchten, dass dem entsprechenden Anschluss 30 / Port 30 zugeordnet ist.
c. Der Benutzer kann ggf. einen der Einbauorte 320 auswählen und die Komponente 80 am gewünschten Einbauort 320 bzw. am Anschluss 30 / Port 30 installieren bzw. anschließen.
d. Anschließend kann der Benutzer diesen Installationsschritt bestätigen. Dies ermöglicht es dem Computer 5, den Installationsschritt zu dokumentieren und die Angabe des ausgewählten Einbauorts 320 bzw. Anschluss 30 / Ports 30 zu hinterlegen. Hierzu können eine Angabe zum Anschluss 30 / Port 30, bspw. eine Adresse des Anschlusses 30 / Ports 30, und/oder die Kennzeichnung der Komponente 80 und/oder Bezeichnung des Geräts 50 und/oder der Einbauort und/oder dergleichen in der Anschlussdokumentation hinterlegt werden.

Die Anschlussdokumentation dient somit insbesondere zur Dokumentation der Verbindung der Geräte 50 mit den Anschlusselementen 10 auf Basis der bereitgestellten Installationsvorgabe. Weiter kann die Anschlussdokumentation automatisch ausgewertet werden, um auf dieser Basis ein Abgleichergebnis zu ermitteln und für die Installation und/oder Inbetriebnahme und/oder Wartung und/oder Modernisierung und/oder im Betrieb der Anlage 1 bereitzustellen.

Durch das Abgleichergebnis kann insbesondere angegeben werden, ob die vorgegebene Installation mit einer tatsächlichen Installation übereinstimmt. Dies ist z. B. dann sinnvoll, wenn die vorgenannte Bestätigung durch den Benutzer fehlerhaft ist und/oder wenn beabsichtigt eine Abweichung von der Installationsvorgabe durch den Benutzer vorgenommen wird. Um diese Abweichung durch die automatisierte Auswertung zu erfassen, kann eine computer-gestützte Prüfung durchgeführt werden, ob die dokumentierte Verbindung der Geräte 50 mit den Anschlusselementen 10 mit einer tatsächlichen Verbindung der Geräte 50 mit den Anschlusselementen 10 übereinstimmt. Die Auswertung kann dabei ggf. auch eine Auswertung der Installationsvorgabe hinsichtlich der Verschaltung der Komponenten 80 umfassen.

Es kann die Übereinstimmung auch hinsichtlich der konkreten Anschlusses 30, vorzugsweise Ports 30, der Anschlusselemente 10, an welchen die Geräte 50 anzuschließen sind, geprüft werden (vgl. Fig. 2 und 3). Dies ist z. B. möglich, indem die Anschlusselemente 10 über das Kommunikationssystem oder eine andere Schnittstelle dahingehend abgefragt werden, welche der Anschlüsse 30 / Ports 30 belegt sind. In einigen Fällen, wie z. B. bei dem Einsatz von IO-Link-Geräten 50, könnten hierdurch auch weitere Details über das angeschlossene Gerät 50 ermittelt werden (wie eine Kennzeichnung oder dergleichen). Eine weitere Möglichkeit besteht darin, dass der Benutzer zu einer manuellen Aktivierung des Geräts 50 aufgefordert wird. Hierzu kann z. B. bei einem Sensor wie einer Lichtschranke eine Handbewegung dienen, welche eine Erfassung des Sensors auslöst. Bei einem Aktor kann bspw. eine Stromcharakteristik am Anschlusselement 10 ausgewertet werden. Die Aktivierung des Geräts 50 kann zu einer Ausgabe des Geräts 50 führen, die am Anschluss 30 bzw. Port 30 des Anschlusselements 10, an dem das Gerät 50 angeschlossen ist, erfasst werden kann. Durch die Erfassung dieser definierten Ausgabe des Geräts 50 ist es somit möglich, die tatsächliche Verbindung zu ermitteln.

Ferner kann es durch eine automatisierte Auswertung der bereitgestellten Anschlussdokumentation möglich sein, dass zumindest eine oder mehrere gerätespezifische Einrichtungsspezifikationen für die verbundenen Geräte 50 bereitgestellt und/oder an wenigstens eines der Anschlusselemente 10 und/oder an wenigstens eines der damit verbundenen Geräte 50 übertragen werden. Dabei kann an das jeweilige Anschlusselement 10 diejenigen der zumindest einen oder mehreren gerätespezifischen Einrichtungsspezifikationen in der Form von Gerätebeschreibungen übertragen werden, die für das wenigstens eine mit dem Anschlusselement 10 verbundenen Gerät 50 vorgesehen sind, insbesondere dieses korrekt beschreiben. Durch die automatisierte Auswertung der bereitgestellten Anschlussdokumentation kann dabei die für das Gerät 50 vorgesehene Gerätebeschreibung ermittelt werden. Hierzu wertet die automatisierte Auswertung z. B. die in der Anschlussdokumentation hinterlegten Angaben wie eine Gerätebezeichnung aus. Die Übertragung der Einrichtungsspezifikationen ermöglicht insbesondere eine automatisierte Parametrisierung der Geräte 50.

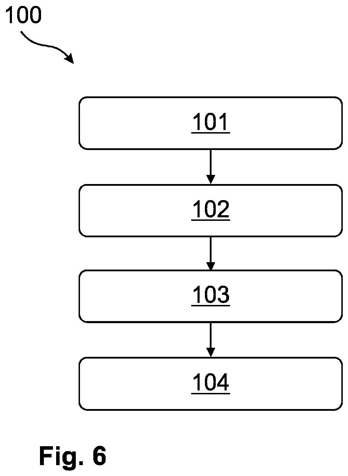

In Fig. 6 ist schematisch ein Verfahren 100 gemäß Ausführungsbeispielen der Erfindung dargestellt. Das Verfahren 100 dient dabei zur computer-gestützten Installation und/oder Inbetriebnahme und/oder Wartung und/oder Modernisierung einer industriellen Anlage 1. Gemäß einem ersten Verfahrensschritt 101 ist ein Bereitstellen einer Installationsvorgabe, insbesondere mit einem digitalen Schaltplan und/oder mechanischen Plan, vorgesehen. Damit kann ein zumindest teilweiser Aufbau, insbesondere ein mechanischer, ein hydraulischer, ein fluider, ein pneumatischer und/oder ein elektrischer Aufbau, zumindest eines Teils der Anlage 1 vorgegeben sein, bei welchem Geräte 50 und Anschlusselemente 10, insbesondere Module 10, zur Bereitstellung von Automatisierungsfunktionen elektrisch und/oder für einen Signal- und/oder Datenaustausch, insbesondere dezentral im Feld miteinander, bevorzugt kabelgebunden oder via Funk, verbunden sind. Die Automatisierungsfunktionen umfassen bspw. die Überwachung und/oder Steuerung und/oder Regelung bei der Anlage 1. Die Geräte 50 können Sensoren, Aktoren, Steuerungen, Rechner, Kommunikationsmodule, Speichermedien und/oder Anzeigeelemente umfassen. Die Anschlusselemente 10 können Steckverbinder, Klemmen, Schalter, Relais und/oder Feldbusmodule sein. Die dezentrale Installation ermöglicht ferner eine flexible und anpassungsfähige Konfiguration der Anlage 1, da Geräte 50 und Anschlusselemente 10 einfach hinzugefügt, ersetzt oder entfernt werden können, ohne dass die gesamte Anlage 1 neu verkabelt werden muss.

Gemäß einem zweiten Verfahrensschritt 102 kann ein Bereitstellen einer Montage- und/oder Anschlussdokumentation vorgesehen sein, bei welcher auf Basis der bereitgestellten Installationsvorgabe der zumindest teilweise Aufbau, umfassend einen mechanischen, einen hydraulischen, einen fluiden, einen pneumatischen und/oder einen elektrischen Aufbau und/oder die Verbindung der Geräte 50 mit den Anschlusselementen 10, dokumentiert ist.

Gemäß einem dritten Verfahrensschritt 103 kann eine Ist-Spezifikation bereitgestellt werden, welche einen tatsächlichen (insbesondere realen) zumindest teilweisen Aufbau zumindest eines Teils der Anlage 1 und/oder eine tatsächliche (insbesondere reale) Verbindung der Geräte 50 mit den Anschlusselementen 10 bei der (realen) Anlage 1 spezifiziert.

Gemäß einem vierten Verfahrensschritt 104 kann ein Abgleichergebnis auf Basis einer automatisierten Auswertung der bereitgestellten Montage- und/oder Anschlussdokumentation und der Ist-Spezifikation ermittelt werden. Dabei kann eine Differenz zwischen der Ist-Spezifikation und der Montage- und/oder Anschlussdokumentation ermittelt werden, vorzugsweise als eine Differenz zwischen dem tatsächlichen zumindest teilweisen Aufbau und dem dokumentierten zumindest teilweisen Aufbau, jeweils zumindest hinsichtlich des Teils der Anlage 1, und/oder zwischen der tatsächlichen Verbindung und der dokumentierten Verbindung ermittelt werden, um die ermittelte Differenz im Abgleichergebnis bereitzustellen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Anlage
- 2: Steuerungseinrichtung
- 5: Vorrichtung
- 6: Computerprogramm

- 10: Anschlusselement, Modul

- 20: Leuchtmittel

- 30: Anschluss, Port

- 40: Gehäuse

- 50: Gerät, Sensor, Aktor

- 80: Komponente
- 81: erste Komponente, Aktor
- 82: zweite Komponente, Sensor

- 90: Verbindungsmittel, Kabel

- 100: Verfahren
- 101: erster Verfahrensschritt
- 102: zweiter Verfahrensschritt
- 103: dritter Verfahrensschritt
- 104: vierter Verfahrensschritt

- 200: Lesegerät
- 201: Funkschnittstelle

- 300: Benutzeroberfläche
- 310: räumliche Darstellung

- 320: Einbauorte

## Patentansprüche

1. Verfahren (100) zur computer-gestützten Installation und/oder Inbetriebnahme und/oder Wartung und/oder Modernisierung einer industriellen Anlage (1), umfassend die nachfolgenden Schritte:
- Bereitstellen (101) einer Installationsvorgabe, insbesondere mit einem digitalen Schaltplan und/oder mechanischen Plan, um einen zumindest teilweisen Aufbau zumindest eines Teils der Anlage (1) vorzugeben, bei welchem Geräte (50) und Anschlusselemente (10), insbesondere Module (10), zur Bereitstellung von Automatisierungsfunktionen elektrisch und/oder für einen Signal- und/oder Datenaustausch im Feld miteinander verbunden sind,
- Bereitstellen (102) einer Montage- und/oder Anschlussdokumentation, bei welcher auf Basis der bereitgestellten Installationsvorgabe der zumindest teilweise Aufbau, umfassend einen mechanischen und/oder einen hydraulischen und/oder einen fluiden und/oder einen pneumatischen und/oder einen elektrischen Aufbau und/oder die Verbindung der Geräte (50) mit den Anschlusselementen (10), dokumentiert ist,
- Bereitstellen (103) einer Ist-Spezifikation, welche einen tatsächlichen zumindest teilweisen Aufbau zumindest eines Teils der Anlage (1) und/oder eine tatsächliche Verbindung der Geräte (50) mit den Anschlusselementen (10) bei der Anlage (1) spezifiziert,
- Ermitteln (104) eines Abgleichergebnisses auf Basis einer automatisierten Auswertung der bereitgestellten Montage- und/oder Anschlussdokumentation und der Ist-Spezifikation, wobei eine Differenz zwischen der Ist-Spezifikation und der Montage- und/oder Anschlussdokumentation ermittelt wird, als eine Differenz zwischen dem tatsächlichen zumindest teilweisen Aufbau und dem dokumentierten zumindest teilweisen Aufbau, jeweils zumindest hinsichtlich des Teils der Anlage (1), und/oder zwischen der tatsächlichen Verbindung und der dokumentierten Verbindung ermittelt wird, um die ermittelte Differenz im Abgleichergebnis bereitzustellen,
wobei
die Ermittlung (104) des Abgleichergebnisses den folgenden Schritt umfasst, welcher automatisiert durchgeführt wird:
- Prüfen, dass der dokumentierte zumindest teilweise Aufbau, zumindest hinsichtlich des Teils der Anlage (1), und die dokumentierte Verbindung der Geräte (50) mit den Anschlusselementen (10) mit dem tatsächlichen zumindest teilweisen Aufbau und einer tatsächlichen Verbindung der Geräte (50) mit den Anschlusselementen (10) übereinstimmt,
wobei die Übereinstimmung auch hinsichtlich konkreter Anschlüsse (30) der Anschlusselemente (10), an welchen die Geräte (50) anzuschließen sind, geprüft wird,
wobei das Verfahren (100) weiter umfasst:
Bereitstellen des Abgleichergebnisses für die Anlage (1) und/oder für eine weitere Anlage,
um eine neue Installationsvorgabe bereitzustellen, die Anweisungen für den Betrieb und die Wartung der Anlage und/oder eine detaillierte Beschreibung des Aufbaus der jeweiligen Anlage und/oder von Installationsschritten enthält, und
um mittels des Abgleichergebnisses die Installation und/oder Inbetriebnahme und/oder den Betrieb und/oder die Wartung und/oder die Modernisierung computer-gestützt anzuleiten..

2. Verfahren (100) nach Anspruch 1,
**dadurch gekennzeichnet,**
**dass** die bereitgestellte Montage- und/oder Anschlussdokumentation aus einer automatisierten Dokumentation von Installationshandlungen resultiert, bei welcher ein Benutzer für die Durchführung der Installationshandlungen schrittweise durch einen Computer zum zumindest teilweisen Aufbau der Anlage (1), zumindest hinsichtlich des Teils der Anlage (1), und/oder zur Verbindung der Geräte (50) mit den Anschlusselementen (10) angeleitet wird, und bei welcher für die jeweilige Installationshandlung eine manuelle Bestätigung des Benutzers erfasst wird, dass die Installationshandlung ordnungsgemäß durchgeführt worden ist, um auf dieser Basis die Dokumentation vorzunehmen, wobei die Anleitung und/oder die Bestätigung und/oder die Dokumentation unter Angabe zumindest eines konkreten Anschlusses (30) für zumindest eines der Anschlusselemente (10) erfolgt, an welchem zumindest eines der Geräte (50) angeschlossen worden ist, wobei zumindest dadurch bei der bereitgestellten Montage- und/oder Anschlussdokumentation die Verbindung der Geräte (50) mit den Anschlusselementen (10) auf Basis der bereitgestellten Installationsvorgabe dokumentiert ist, dass für die schrittweise Anleitung durch den Computer die Installationsvorgabe ausgewertet wird und/oder die Verbindung in Bezug auf die Installationsvorgabe dokumentiert wird.

3. Verfahren (100) nach einem der vorhergehenden Ansprüche,
**dadurch gekennzeichnet,**
**dass** die Übereinstimmung auch hinsichtlich der konkreten Anschlüsse (30) in der Form von Ports und/oder Klemmen der Anschlusselemente (10), an welchen die Geräte (50) anzuschließen sind, geprüft wird.

4. Verfahren (100) nach Anspruch 3,
**dadurch gekennzeichnet,**
**dass** die Bereitstellung der Ist-Spezifikation zumindest teilweise umfasst:
- Ermitteln der tatsächlichen Verbindung der Geräte (50) mit den Anschlusselementen (10) zumindest teilweise durch eine automatisierte Abfrage an den Anschlusselementen (10), und/oder
- Auswerten eines Einbauorts wenigstens eines der verbundenen Geräte (50) auf Basis eines mechanischen Modells, und/oder
- Auswerten einer visuellen Aufzeichnung zumindest des Teils der Anlage (1), und/oder
- Elektronische Auswertung von Komponenten (80) der Anlage (1), vorzugsweise einer Ausgabe der Komponenten (80), und/oder
- Auswerten einer Benutzereingabe.

5. Verfahren (100) nach Anspruch 4,
**dadurch gekennzeichnet,**
**dass** das Ermitteln der tatsächlichen Verbindung zumindest den folgenden Schritt umfasst:
- Durchführen einer automatischen Erkennung zumindest eines Teils einer tatsächlichen Topologie der Anlage (1),
wobei hierzu eine Topologie-Information von den jeweiligen Anschlusselementen (10) empfangen wird, welche vorzugsweise zumindest eine der folgenden Informationen umfasst:
- Eine Angabe von Anschlüssen (30) des Anschlusselements (10), an denen Geräte (50) angeschlossen sind,
- Eine Kennung eines angeschlossenen Geräts (50), vorzugsweise mit Angabe des Anschlusses (30) des Anschlusselements (10), an welchem das Gerät (50) angeschlossen ist, und/oder mit Angabe einer Kennzeichnung des Geräts (50),
- Eine Angabe von Nachbaranschlusselementen (10), die in einem gemeinsamen Netzwerk benachbart zum Anschlusselement (10) angeschlossen sind, und die auf Basis einer Kommunikation des Anschlusselements (10) mit den Nachbaranschlusselementen (10), besonders bevorzugt mittels LLDP, ermittelt wird.

6. Verfahren (100) nach Anspruch 4 oder 5,
**dadurch gekennzeichnet,**
**dass** das Ermitteln der tatsächlichen Verbindung zumindest die folgenden Schritte umfasst:
- Initiieren einer Aufforderung an einen Benutzer, eine definierte Ausgabe zumindest eines der Geräte (50) auszulösen,
- Bestimmten der tatsächlichen Verbindung für das Gerät (50), insbesondere des konkreten Anschlusses (30) des Anschlusselements (10), an welchem das Gerät (50) angeschlossen ist, anhand der ausgelösten Ausgabe.

7. Verfahren (100) nach Anspruch 6,
**dadurch gekennzeichnet,**
**dass** der Benutzer zum Auslösen der Ausgabe zu einer manuellen Aktivierung des Geräts (50), vorzugsweise durch eine Handbewegung, welche durch das Gerät (50) in der Form eines Sensors (50) erfasst wird, aufgefordert wird.

8. Verfahren (100) nach einem der Ansprüche 3 bis 7,
**dadurch gekennzeichnet,**
**dass** die Prüfung während einer automatisierten Dokumentation von Installationshandlungen regelmäßig initiiert wird.

9. Verfahren (100) nach einem der vorhergehenden Ansprüche,
**dadurch gekennzeichnet,**
**dass** die Ermittlung (104) des Abgleichergebnisses umfasst:
- Zuordnen der dokumentierten Verbindung der Geräte (50) mit den Anschlusselementen (10) gemäß der bereitgestellten Montage- und/oder Anschlussdokumentation zu der vorgegebenen Verbindung der Geräte (50) mit den Anschlusselementen (10) gemäß der Installationsvorgabe, um die vorgegebene Verbindung um eine Anschlussspezifikation der Montage- und/oder Anschlussdokumentation zu erweitern, welche die konkreten Anschlüsse (30), vorzugsweise Ports, der Anschlusselemente (10) spezifiziert, an welchen die dokumentierte Verbindung der Geräte (50) erfolgt ist.

10. Verfahren (100) nach einem der vorhergehenden Ansprüche,
**dadurch gekennzeichnet,**
**dass** die Ermittlung (104) des Abgleichergebnisses einen Vergleich umfasst von
- der dokumentierten Verbindung der Geräte (50) mit den Anschlusselementen (10) gemäß der Montage- und/oder Anschlussdokumentation
mit
- der vorgegebenen Verbindung der Geräte (50) mit den Anschlusselementen (10) gemäß der Installationsvorgabe,
um Abweichungen zwischen der dokumentierten und vorgegebenen Verbindung zu erkennen und über das Abgleichergebnis auszugeben.

11. Verfahren (100) nach einem der vorhergehenden Ansprüche,
**dadurch gekennzeichnet,**
**dass** das Abgleichergebnis umfasst:
- eine Angabe wenigstens eines oder mehrerer konkreter Anschlüsse (30) der Anschlusselemente (10), an welchem die dokumentierte Verbindung zumindest eines der Geräte (50) erfolgt ist, und/oder
- ein Prüfergebnis, welches angibt, ob eine tatsächliche Verbindung des Geräts (50) an den jeweiligen konkreten Anschluss (30) vorliegt.

12. Verfahren (100) nach einem der vorhergehenden Ansprüche,
**dadurch gekennzeichnet,**
**dass** die Ermittlung (104) des Abgleichergebnisses umfasst:
- Auflösen von Uneindeutigkeiten bei einer Zuordnung der dokumentierten Verbindung der Geräte (50) mit den Anschlusselementen (10) gemäß der bereitgestellten Montage- und/oder Anschlussdokumentation zu der vorgegebenen Verbindung der Geräte (50) mit den Anschlusselementen (10) gemäß der Installationsvorgabe,
wobei die Uneindeutigkeiten insbesondere dadurch resultieren, dass mehrere baugleiche Geräte (50) an einem oder mehreren Anschlusselementen (10) angeschlossen sind, wobei zur Auflösung der Uneindeutigkeiten eine räumliche Information über einen tatsächlichen Einbauort der baugleichen Geräte (50) ausgewertet wird, vorzugsweise durch einen Vergleich mit einem mechanischen Modell der Anlage (1).

13. Verfahren (100) nach einem der vorhergehenden Ansprüche,
**dadurch gekennzeichnet,**
**dass** die Montage- und/oder Anschlussdokumentation spezifiziert, welche Geräte (50) bei der Installation an welches der Anschlusselemente (10) der Anlage (1) und/oder in welcher Reihenfolge die Geräte (50) und/oder mit welcher Abweichung von der Installationsvorgabe die Geräte (50) an die Anschlusselemente (10) angeschlossen wurden.

14. Computerprogramm (6), umfassend Befehle, die bei der Ausführung des Computerprogramms (6) durch einen Computer diesen veranlassen, das Verfahren nach einem der vorhergehenden Ansprüche auszuführen.

15. Vorrichtung (5) zur Datenverarbeitung, die eingerichtet ist, das Verfahren (100) nach einem der Ansprüche 1 bis 13 auszuführen.

## Claims

1. Method (100) for computer-aided installation and/or commissioning and/or maintenance and/or modernization of an industrial plant (1), comprising the following steps:
- Providing (101) an installation specification, in particular with a digital circuit diagram and/or a mechanical plan, in order to specify an at least partial assembly of at least a part of the plant (1), in which devices (50) and connection elements (10), in particular modules (10), are connected to each other electrically and/or for signal and/or data exchange in the field for providing automation functions,
- Providing (102) an assembly and/or connection documentation in which, on the basis of the provided installation specification, the at least partial assembly, comprising a mechanical and/or a hydraulic and/or a fluid and/or a pneumatic and/or an electrical assembly and/or the connection of the devices (50) to the connection elements (10), is documented,
- Providing (103) an actual specification which specifies an actual at least partial assembly of at least a part of the plant (1) and/or an actual connection of the devices (50) to the connection elements (10) in the plant (1),
- Determining (104) a comparison result based on an automated evaluation of the provided assembly and/or connection documentation and the actual specification, wherein a difference between the actual specification and the assembly and/or connection documentation is determined as a difference between the actual at least partial assembly and the documented at least partial assembly, in each case at least with regard to the part of the plant (1), and/or between the actual connection and the documented connection, in order to provide the determined difference in the comparison result,
wherein the determination (104) of the comparison result comprises the following step, which is performed automatically:
- Verifying that the documented at least partial assembly, at least with regard to the part of the plant (1), and the documented connection of the devices (50) to the connection elements (10) correspond to the actual at least partial assembly and an actual connection of the devices (50) to the connection elements (10), wherein the correspondence is also verified with regard to specific connection points (30) of the connection elements (10) to which the devices (50) are to be connected, wherein the method (100) further comprises:
- Providing the comparison result for the plant (1) and/or for another plant
in order to provide new installation specifications comprising instructions for the operation and maintenance of the plant and/or a detailed description of the assembly of the respective plant and/or installation steps, and
in order to guide the installation and/or the commissioning and/or the operation and/or the maintenance and/or the modernization in a computer-aided manner by means of the comparison result.

2. Method (100) according to claim 1,
**characterized in that** the provided assembly and/or connection documentation results from an automated documentation of installation actions, in which a user is stepwise guided by a computer to perform the installation actions for the at least partial assembly of the plant (1), at least with respect to the part of the plant (1), and/or for the connection of the devices (50) with the connection elements (10), and in which, for the respective installation action, a manual confirmation by the user is captured that the installation operation has been properly carried out in order to perform the documentation on this basis, wherein the guidance and/or the confirmation and/or the documentation is performed with a specification of at least one specific connection point (30) of at least one of the connection elements (10), at which at least one of the devices (50) has been connected, wherein, at least thereby, in the provided assembly and/or connection documentation the connection of the devices (50) to the connection elements (10) is documented on the basis of the provided installation specification, **in that** the installation specification is evaluated for the stepwise guidance by the computer and/or the connection is documented with respect to the installation specification.

3. Method (100) according to any one of the preceding claims,
**characterized in that** the correspondence is also verified with regard to the specific connection points (30) in the form of ports and/or terminals of the connection elements (10) to which the devices (50) are to be connected.

4. Method (100) according to claim 3,
**characterized in that** the provision of the actual specification at least partially comprises:
- Determining the actual connection of the devices (50) to the connection elements (10) at least in part by means of an automated query to the connection elements (10), and/or
- Evaluating an installation location of at least one of the connected devices (50) based on a mechanical model, and/or
- Evaluating a visual recording of at least the part of the plant (1), and/or
- Electronically evaluating components (80) of the plant (1), preferably an output of the components (80), and/or
- Evaluating a user input.

5. Method (100) according to claim 4,
**characterized in that** the determination of the actual connection comprises at least the following step:
- Performing an automatic detection of at least a part of an actual topology of the plant (1),
wherein, for this purpose, topology information is received from the respective connection elements (10), which preferably comprises at least one of the following pieces of information:
- An indication of connection points (30) of the connection element (10) to which devices (50) are connected,
- An identifier of a connected device (50), preferably with an indication of the connection point (30) of the connection element (10) to which the device (50) is connected, and/or with an indication of an identifier of the device (50),
- An indication of neighboring connection elements (10) that are connected in a common network neighboring the connection element (10) and that is determined on the basis of communication between the connection element (10) and the neighboring connection elements (10), particularly preferably by means of LLDP.

6. Method (100) according to claim 4 or 5,
**characterized in that** the determination of the actual connection comprises at least the following steps:
- Initiating a request to a user to trigger a defined output of at least one of the devices (50),
- Determining the actual connection for the device (50), in particular the specific connection point (30) of the connection element (10) to which the device (50) is connected, on the basis of the triggered output.

7. Method (100) according to claim 6,
**characterized in that** the user is requested to manually activate the device (50) to trigger the output, preferably by a hand movement that is detected by the device (50) in the form of a sensor (50).

8. Method (100) according to any one of the claims 3 to 7,
**characterized in that** the verification is regularly initiated during an automated documentation of installation actions.

9. Method (100) according to any one of the preceding claims,
**characterized in that** the determination (104) of the comparison result comprises:
- Assigning the documented connection of the devices (50) with the connection elements (10) according to the provided assembly and/or connection documentation to the specified connection of the devices (50) with the connection elements (10) according to the installation specification in order to extend the specified connection by a connection specification of the assembly and/or connection documentation, which specifies the specific connection points (30), preferably ports, of the connection elements (10) to which the documented connection of the devices (50) has been made.

10. Method (100) according to any one of the preceding claims,
**characterized in that** the determination (104) of the comparison result comprises a comparison of
- the documented connection of the devices (50) to the connection elements (10) according to the assembly and/or connection documentation
with
- the specified connection of the devices (50) to the connection elements (10) according to the installation specification,
to detect deviations between the documented and specified connection and to output them via the comparison result.

11. Method (100) according to any one of the preceding claims,
**characterized in that** the comparison result comprises:
- an indication of at least one or more specific connection points (30) of the connection elements (10) at which the documented connection of at least one of the devices (50) took place, and/or
- a verification result indicating whether an actual connection of the device (50) to the respective specific connection point (30) is present.

12. Method (100) according to any one of the preceding claims,
**characterized in that** the determination (104) of the comparison result comprises:
- Resolving ambiguities in an assignment of the documented connection of the devices (50) to the connection elements (10) according to the provided assembly and/or connection documentation to the specified connection of the devices (50) to the connection elements (10) according to the installation specification,
wherein the ambiguities in particular result from multiple structurally identical devices (50) being connected to one or more connection elements (10), wherein, for resolving the ambiguities, a spatial information about an actual installation location of the structurally identical devices (50) is evaluated, preferably by comparison with a mechanical model of the plant (1).

13. Method (100) according to any one of the preceding claims,
**characterized in that** the assembly and/or connection documentation specifies, which devices (50) were connected to which of the connection elements (10) of the plant (1) during installation and/or in which order the devices (50) were connected and/or with what deviation from the installation specification the devices (50) were connected to the connection elements (10).

14. Computer program (6), comprising instructions which, when the computer program (6) is executed by a computer, cause the computer to execute the method according to any one of the preceding claims.

15. Data processing device (5) configured to execute the method (100) according to any one of claims 1 to 13.

## Revendications

1. Procédé (100) d'installation et/ou de mise en service et/ou de maintenance et/ou de modernisation assistés par ordinateur d'un système industriel (1), comprenant les étapes suivantes :
- la fourniture (101) d'une spécification d'installation, en particulier assortie d'un schéma de circuit numérique et/ou d'un plan mécanique, afin de définir au moins une structure partielle d'au moins une partie du système (1), dans lequel des dispositifs (50) et des éléments de raccordement (10), en particulier des modules (10), sont connectés électriquement les uns aux autres pour la mise à disposition de fonctions d'automatisation et/ou pour l'échange de signaux et/ou de données sur le terrain,
- la fourniture (102) de la documentation de montage et/ou de raccordement qui, sur la base de la spécification d'installation fournie, documente au moins la structure partielle, comprenant une structure mécanique et/ou hydraulique et/ou fluide et/ou pneumatique et/ou électrique et/ou la connexion des dispositifs (50) avec les éléments de raccordement (10),
- la fourniture (103) d'une spécification réelle qui spécifie une structure effective au moins partielle d'au moins une partie du système (1) et/ou une connexion effective des dispositifs (50) avec les éléments de raccordement (10) au système (1),
- la détermination (104) d'un résultat de comparaison basé sur une évaluation automatisée de la documentation de montage et/ou de raccordement fournie et de la spécification réelle, une différence entre la spécification réelle et la documentation de montage et/ou de raccordement étant déterminée en tant que différence entre la structure effective au moins partielle et la structure documentée au moins partielle, dans chaque cas au moins en ce qui concerne la partie du système (1), et/ou entre la connexion effective et la connexion documentée afin de fournir la différence déterminée dans le résultat de la comparaison, ladite détermination (104) du résultat de la comparaison comprenant l'étape suivante, qui est effectuée automatiquement :
- la vérification que la structure au moins partielle documentée, au moins en ce qui concerne la partie du système (1), et la connexion documentée des dispositifs (50) avec les éléments de raccordement (10) correspondent à la structure effective au moins partielle et à une connexion effective des dispositifs (50) avec les éléments de raccordement (10),
ladite correspondance étant également vérifiée en ce qui concerne les raccords spécifiques (30) des éléments de raccordement (10) auxquels les dispositifs (50) doivent être connectés,
ledit procédé (100) comprenant en outre :
la fourniture du résultat de la comparaison pour le système (1) et/ou pour un autre système,
afin de fournir une nouvelle spécification d'installation qui comprend des instructions pour le fonctionnement et la maintenance du système et/ou une description détaillée de la structure du système respectif et/ou des étapes d'installation, et
afin d'utiliser le résultat de la comparaison pour guider l'installation et/ou la mise en service et/ou le fonctionnement et/ou la maintenance et/ou la modernisation assistés par ordinateur.

2. Procédé (100) selon la revendication 1,
**caractérisé en ce que** la documentation de montage et/ou de raccordement fournie résulte d'une documentation automatisée d'opérations d'installation, un utilisateur étant guidé étape par étape par un ordinateur pour la réalisation des opérations d'installation en vue de la structure au moins partielle du système (1), au moins en ce qui concerne la partie du système (1), et/ou pour la connexion des dispositifs (50) avec les éléments de raccordement (10), et une confirmation manuelle de l'utilisateur est enregistrée pour chaque opération d'installation qui a été correctement effectuée, afin de créer la documentation sur cette base, ledit guidage et/ou ladite confirmation et/ou ladite documentation étant fournis avec une spécification d'au moins un raccord spécifique (30) pour au moins l'un des éléments de raccordement (10) auquel au moins l'un des dispositifs (50) a été connecté, ladite connexion des dispositifs (50) aux éléments de raccordement (10) étant documentée dans la documentation de montage et/ou de raccordement fournie au moins par le fait que la spécification d'installation est évaluée pour le guidage étape par étape par l'ordinateur et/ou que la connexion est documentée par rapport à la spécification d'installation.

3. Procédé (100) selon l'une des revendications précédentes, **caractérisé en ce que**
la correspondance est également vérifiée en ce qui concerne les raccords spécifiques (30) sous la forme de ports et/ou de bornes des éléments de raccordement (10) auxquels les dispositifs (50) doivent être connectés.

4. Procédé (100) selon la revendication 3,
**caractérisé en ce que** la fourniture de la spécification réelle comprend au moins en partie :
- la détermination de la connexion effective des dispositifs (50) avec les éléments de raccordement (10), au moins en partie au moyen d'une interrogation automatisée des éléments de raccordement (10), et/ou
- l'évaluation de l'emplacement d'au moins l'un des dispositifs connectés (50) sur la base d'un modèle mécanique, et/ou
- l'évaluation d'un enregistrement visuel d'au moins une partie du système (1), et/ou
- l'évaluation électronique des composants (80) du système (1), de préférence d'une sortie des composants (80), et/ou
- l'évaluation des données saisies par l'utilisateur.

5. Procédé (100) selon la revendication 4,
**caractérisé en ce que** la détermination de la connexion effective comprend au moins l'étape suivante :
- la réalisation de la détection automatique d'au moins une partie de la topologie effective du système (1),
lesdites informations de topologie étant reçues des éléments de raccordement respectifs (10), qui comprennent de préférence au moins l'une des informations suivantes :
- une spécification des raccords (30) des éléments de raccordement (10) auxquels les dispositifs (50) sont connectés,
- un identifiant d'un dispositif connecté (50), de préférence avec la spécification du raccord (30) de l'élément de raccordement (10) auquel le dispositif (50) est connecté, et/ou avec la spécification de l'identification du dispositif (50),
- une spécification des éléments de raccordement voisins (10) qui sont connectés dans un réseau commun adjacent à l'élément de raccordement (10), et qui est déterminée sur la base de la communication entre l'élément de raccordement (10) et les éléments de raccordement voisins (10), en particulier de préférence en utilisant le protocole LLDP.

6. Procédé (100) selon la revendication 4 ou 5,
**caractérisé en ce que** la détermination de la connexion effective comprend au moins les étapes suivantes :
- le lancement d'une requête à un utilisateur pour déclencher une sortie définie à partir d'au moins l'un des dispositifs (50),
- la détermination de la connexion effective pour le dispositif (50), en particulier le port spécifique (30) des éléments de raccordement (10) auquel le dispositif (50) est connecté, sur la base de la sortie déclenchée.

7. Procédé (100) selon la revendication 6,
**caractérisé en ce que** l'utilisateur est invité à activer manuellement le dispositif (50) pour déclencher la sortie, de préférence par un mouvement de la main qui est détecté par le dispositif (50) sous la forme d'un capteur (50).

8. Procédé (100) selon l'une des revendications 3 à 7,
**caractérisé en ce que** le test est initié régulièrement pendant la documentation automatisée des actions d'installation.

9. Procédé (100) selon l'une des revendications précédentes,
**caractérisé en ce que** la détermination (104) du résultat de la comparaison comprend :
- l'association de la connexion documentée des dispositifs (50) avec les éléments de raccordement (10) conformément à la documentation de montage et/ou de connexion fournie à la connexion spécifiée des dispositifs (50) avec les éléments de raccordement (10) conformément à la spécification d'installation, afin d'étendre la connexion spécifiée par une spécification de connexion de la documentation de montage et/ou de connexion qui spécifie les raccords spécifiques (30), de préférence des ports, des éléments de raccordement (10) auxquels la connexion documentée des dispositifs (50) a été effectuée.

10. Procédé (100) selon l'une des revendications précédentes,
**caractérisé en ce que** la détermination (104) du résultat de la comparaison comprend la comparaison de
- la connexion documentée des dispositifs (50) aux éléments de raccordement (10) conformément à la documentation de montage et/ou de connexion
avec
- la connexion spécifiée des dispositifs (50) avec les éléments de raccordement (10) conformément aux spécifications d'installation,
pour détecter les divergences entre la connexion documentée et la connexion spécifiée et pour afficher le résultat de la comparaison.

11. Procédé (100) selon l'une des revendications précédentes, **caractérisé en ce que** le résultat de la comparaison comprend :
- une spécification d'au moins un ou plusieurs raccords spécifiques (30) des éléments de raccordement (10) auxquels la connexion documentée d'au moins l'un des dispositifs (50) a été effectuée, et/ou
- un résultat de test indiquant s'il existe une connexion effective du dispositif (50) au port spécifique respectif (30).

12. Procédé (100) selon l'une des revendications précédentes,
**caractérisé en ce que** la détermination (104) du résultat de la comparaison comprend :
- la résolution des ambiguïtés dans l'attribution de la connexion documentée des dispositifs (50) avec les éléments de raccordement (10) conformément à la documentation de montage et/ou de raccordement fournie à la connexion spécifiée des dispositifs (50) avec les éléments de raccordement (10) conformément aux spécifications d'installation,
lesdites ambiguïtés résultant en particulier du fait que plusieurs dispositifs identiques (50) sont connectés à un ou plusieurs éléments de raccordement (10), lesdites informations spatiales concernant l'emplacement d'installation effectif des dispositifs identiques (50) étant évaluées pour résoudre les ambiguïtés, de préférence par comparaison à un modèle mécanique du système (1).

13. Procédé (100) selon l'une des revendications précédentes,
**caractérisé en ce que** la documentation de montage et/ou de raccordement spécifie quels dispositifs (50) ont été connectés à quels éléments de raccordement (10) du système (1) lors de l'installation et/ou dans quel ordre les dispositifs (50) et/ou avec quelle divergence par rapport à la spécification d'installation les dispositifs (50) ont été connectés aux éléments de raccordement (10).

14. Programme informatique (6), comprenant des instructions qui, lorsque le programme informatique (6) est exécuté par un ordinateur, lui font exécuter le procédé selon l'une des revendications précédentes.

15. Appareil (5) de traitement de données, configuré pour mettre en œuvre le procédé (100) selon l'une des revendications 1 à 13.
